# FASCICULE DE BREVET EUROPEEN

(11) **EP 2 454 512 B1**
(45) Date de publication et mention de la délivrance du brevet: **29.05.2013**
(21) Numéro de dépôt: 10742019.2
(22) Date de dépôt: 01.07.2010
(51) Int. Cl.: F16L 13/02, F16L 39/00

(54) **ENSEMBLE DE CONDUITES COAXIALES COMPRENANT DES PIECES DE JONCTION A CAVITES INTERNES ETANCHES ET PROCEDE DE REALISATION**
ANORDNUNG AUS KOAXIALROHREN MIT VERBINDUNGSTEILEN MIT VERSIEGELTEN INNENVERTIEFUNGEN UND HERSTELLUNGSVERFAHREN DAFÜR
ASSEMBLY OF COAXIAL PIPES INCLUDING JUNCTION PARTS WITH SEALED INNER CAVITIES, AND METHOD FOR MAKING SAME

(30) Priorité: 17.07.2009 FR 0954966
(43) Date de publication de la demande: 23.05.2012
(73) Titulaire: Saipem SA, 78180 Montigny-le-Bretonneux (FR)
(72) Inventeur: PIONETTI, François-Régis, F-50450 La Baleine (FR)
(74) Mandataire: Domange, Maxime
(86) Numéro de dépôt international: PCT/FR2010/051380
(87) Numéro de publication internationale: WO 2011/007075

(56) Documents cités:
- EP-A1- 1 771 679
- GB-A- 2 396 196

## Description

La présente invention concerne le domaine des conduites à double paroi intégrant un complexe d'isolation, notamment des conduites sous-marines véhiculant des fluides chauds ou froids.

La présente invention concerne en particulier les conduites sous-marines à isolation renforcée, installées sur les champs pétroliers par grandes profondeurs, ainsi qu'aux conduites en suspension entre le fond de la mer et un navire de surface ancré sur ledit champ pétrolier.

Plus précisément, la présente invention concerne une pièce cylindrique de jonction destinée à la jonction de deux éléments d'un ensemble de deux conduites coaxiales, comprenant une conduite externe contenant une conduite interne délimitant un espace annulaire contenant de préférence un matériau d'isolation.

La présente invention concerne également un procédé d'assemblage de deux éléments constitué chacun d'un ensemble de deux conduites coaxiales comprenant à leurs extrémités une pièce de jonction selon l'invention.

Dans la majorité des domaines industriels on recherche des systèmes d'isolation performants pour maintenir les fluides véhiculés dans les tuyauteries à température constante, de manière à ce que les transferts entre équipements puissent être rendus possibles sur des distances importantes, atteignant par exemple plusieurs centaines de mètres, voire plusieurs kilomètres. De telles distances sont courantes dans les industries telles que les raffineries de pétrole, les installations de gaz naturel liquéfié (-165°C), les champs pétroliers sous-marins lesquels s'étendent sur plusieurs dizaines de kilomètres. De tels champs pétroliers sont développés par des profondeurs d'eau de plus en plus importantes laquelle peut largement dépasser 3000 m.

De nombreux systèmes ont été développés pour atteindre un haut niveau de performance thermique et des versions spécifiques ont été développées pour répondre de manière plus adaptée aux grands fonds, c'est à dire pour résister à la pression du fond de la mer. Les technologies les plus performantes qui ont été développées pour atteindre cet objectif sont les technologies dites "Pipe In Pipe" ou PIP, c'est à dire "conduite dans une conduite", dans laquelle une conduite interne véhicule le fluide et une conduite externe coaxiale à la précédente est en contact avec le milieu ambiant, c'est à dire l'eau. L'espace annulaire entre les deux conduites peut être rempli d'un matériau isolant ou encore être vidé de tout gaz.

Dans ce type de conduite, l'espace annulaire rempli ou non d'un matériau isolant, est en général à une pression absolue inférieure à la pression atmosphérique, voire vidé de tout gaz, et l'on peut, en première approximation, considérer que radialement, la conduite interne résiste à la pression d'éclatement due au fluide interne, alors que l'enveloppe externe résiste à l'implosion créée par la pression hydrostatique au niveau du fond (p.g.h) qui est d'environ 1MPa par tranche de 100 m d'eau, c'est-à-dire 30MPa pour une profondeur de 3000m. L'effet axial dû à la pression, appelé effet de fond, s'exerce sur la section circulaire des conduites et parallèlement à l'axe desdites conduites et se répartit, en première approximation sur les deux conduites (car liées aux extrémités), au prorata des sections respectives de matériaux, en général de l'acier.

Dans le cadre des installations par grande profondeur, les conduites sous-marines ainsi que les ensembles de conduites coaxiales sous-marines sont assemblés à terre en éléments de longueur unitaire, de l'ordre de 20 à 100 m selon la capacité de tenu du système de pose. Puis ils sont transportés ainsi en mer sur un navire de pose. Lors de la pose, les longueurs unitaires des divers éléments d'ensembles de conduites coaxiales sont raccordés les uns aux autres à bord du navire et au fur et à mesure de leur pose en mer. Il est donc important que ce raccordement puisse être intégré dans le procédé de montage et d'assemblage de la conduite et de pose de celle-ci au fond de la mer en le retardant le moins possible, et puisse donc être réalisé rapidement et aisément.

Lors de la pose par grand fond d'un PiP conventionnel, comparé ou tel que décrit dans ce brevet, ledit PiP est soumis à flexion, principalement dans la partie basse proche du fond de la mer. La flexion est maximale au point de contact avec le sol car le rayon de courbure décroît depuis la surface jusqu'au point de contact avec le sol, où il est alors minimal, puis le PiP reposant sensiblement à l'horizontale sur le fond de la mer, présente alors un rayon de courbure infini. La flexion engendrée au cours de la pose crée des contraintes importantes dans chacun des tubes du PiP et dans la zone de raccordement de deux longueurs successives de PiP.

Pour ce faire, on utilise des pièces de jonction ou pièces de raccordement forgées en acier, assemblées aux extrémités desdits éléments d'ensembles de conduites coaxiales à assembler. La pièce de jonction à l'extrémité aval d'un premier élément d'ensemble de conduites coaxiales non encore assemblées, étant raccordée à la pièce de jonction à l'extrémité libre amont d'un deuxième élément d'ensemble de conduites coaxiales déjà assemblées en aval.

On connaît les brevets GB-2,161,565 et GB-2,191,842 qui décrivent un PiP et son mode d'assemblage, ainsi que deux modes de réalisation de pièces de jonction ou de raccordement forgées.

Une des lacunes des pièces forgées de jonction proposées dans la technique antérieure tient en ce que dans la zone de raccordement desdites pièces, le diamètre des pièces est réduit et correspond sensiblement à celui de la conduite interne. Il en résulte une variation très importante de l'inertie de la section transversale du PiP entre la zone courante dudit PiP, et ladite zone de raccordement entre deux dites longueurs unitaires de PiP, ceci conduit à créer un point de faiblesse à chacun de ces raccordements par soudage entre deux pièces forgées, la zone dudit soudage étant alors particulièrement sensible aux phénomènes de fatigue, tant durant la pose que pendant la durée de vie de la conduite.

Pour éviter cette zone de faiblesse et conserver une inertie de section transversale sensiblement constante, on peut augmenter l'épaisseur de la paroi de la pièce forgée dans toute la zone située entre la partie massive de ladite pièce forgée et la zone du chanfrein où sera effectuée la soudure. Mais, il faut alors en général quasiment doubler ladite épaisseur. Et, dans le cas des conduites de fort diamètre et devant être posées par grandes profondeurs, le soudage devient alors problématique en raison de la très forte épaisseur d'acier, ladite épaisseur pouvant atteindre 40 à 50mm, ce qui nécessite des procédés de soudage très délicats, voire dans certains cas quasiment irréalisables sans défauts compte tenu des effets dynamiques en mer sur la masse d'acier en fusion. De plus, lesdites soudures étant réalisées à bord des navires de pose, ces derniers ayant un coût horaire extrêmement élevé, le coût d'installation devient prohibitif et les risques de défaillance sont considérables en raison de la complexité desdites opérations de soudage sur site.

Dans EP-1 771 679 au nom de la demanderesse, on a proposé de réaliser un raccordement de longueur unitaire d'ensemble de conduites coaxiales de type PiP amélioré de manière à faciliter la mise en oeuvre des moyens de raccordement et opérations de raccordement, notamment en optimisant les engins de pose, et dont les zones de raccordement entre deux longueurs unitaires sont renforcées, de manière à ce que les contraintes engendrées lors de la pose soient minimisées et que le comportement en fatigue, dans le cas des liaisons fond-surface soit radicalement amélioré.

Pour ce faire, dans EP-1 771 679, on fournit une pièce de jonction de révolution destinée à la jonction de deux éléments d'un ensemble d'au moins deux conduites coaxiales, comprenant une conduite externe contenant une conduite interne délimitant un espace annulaire contenant de préférence un matériau d'isolation caractérisée en ce que ladite pièce de jonction est délimitée comme suit :
■ dans une direction radiale par rapport à un axe longitudinal XX' de révolution de ladite pièce, elle est délimitée par une paroi interne cylindrique sensiblement de même diamètre que celui de la partie courante de ladite conduite interne, et par une paroi externe cylindrique de diamètre sensiblement égal au diamètre externe de la partie courante de ladite conduite externe, et
■ dans la direction axiale longitudinale XX',
   - du côté de ladite pièce de jonction destiné à être assemblé par soudage à l'extrémité desdites conduites externe et interne d'un dit élément d'un ensemble d'au moins deux conduites coaxiales, lesdites parois externe et interne de ladite pièce de jonction forment en section longitudinale des premières branches respectivement externe et interne sensiblement de même épaisseur que lesdites conduites externe et interne auxquelles elles sont destinées à être assemblées, lesdites premières branches externe et interne délimitant une première cavité annulaire, et
   - du côté opposé de ladite pièce de jonction destiné à être assemblé à une autre dite pièce de jonction, elle-même assemblée par soudage à l'extrémité d'un autre élément d'ensemble de deux conduites coaxiales, lesdites parois externe et interne forment en section longitudinale des deuxièmes branches respectivement externe et interne, délimitant une deuxième cavité annulaire,
   - les fonds desdites première et deuxième cavités étant espacés dans ladite direction longitudinale XX', de manière à délimiter une zone pleine de ladite pièce de jonction dans laquelle lesdites parois externe et interne forment les faces externe et interne d'une même paroi cylindrique.

Une pièce de jonction de ce type est constituée d'une unique pièce métallique forgée, c'est-à-dire constituée d'un seul tenant, de préférence en acier, ou bien encore de préférence en acier allié.

Dans EP-1 771 679, on fournit également un ensemble d'au moins deux conduites coaxiales constitué en partie courante d'une conduite externe et d'une conduite interne, délimitant un espace annulaire, comprenant de préférence un matériau d'isolation, comportant :
- à au moins une de ses extrémités, une pièce de jonction tel que défini ci-dessus, assemblée par soudage au niveau des extrémités desdites premières branches externe et interne et, respectivement des extrémités de même épaisseur desdites conduite externe et respectivement conduite interne,
- la longueur de dépassement de l'extrémité desdites premières branches interne et externe l'une par rapport à l'autre de chaque dite pièce de jonction, étant apte à s'adapter à la longueur de dépassement de l'extrémité desdites conduites externe et interne l'une par rapport à l'autre à l'extrémité desdits éléments de dits ensembles de conduites coaxiales, et
- la dite première cavité annulaire étant de préférence remplie de dit matériau d'isolation.

Un procédé d'assemblage de deux éléments constitué chacun d'un ensemble d'au moins deux conduites coaxiales tel que défini ci-dessus comprend les étapes dans lesquelles :
1) on assemble un dit premier élément d'ensemble de conduites coaxiales tel que défini ci-dessus, comportant une première pièce de jonction, tel que défini ci-dessus, à l'extrémité aval, et un deuxième élément de dit ensemble de conduites coaxiale tel que défini ci-dessus comportant une deuxième dite pièce de jonction selon l'invention, à l'extrémité amont, les deux dites deuxièmes branches externes des deux dites première et deuxième pièces de jonction étant de préférence de même épaisseur, et
2) on rapproche les unes des autres et on soude entre elles les extrémités libres des seules dites deuxièmes branches externe desdites première et deuxième pièces de jonction des deux dits éléments d'un ensemble d'au moins deux conduites coaxiales selon l'invention à assembler.

La formation desdites première et deuxième cavités annulaires permet d'une part d'établir une continuité au niveau du diamètre interne de la conduite interne et d'autre part de fournir une relative continuité et identité d'inertie de la section transversale, de la zone courante du PiP et de la zone de raccordement, l'épaisseur de la branche externe de la pièce de jonction forgée étant sensiblement égale ou légèrement supérieure à l'épaisseur courante de la conduite externe.

L'éloignement des extrémités desdites premières branches externe et interne par rapport au fond de la première cavité et de l'extrémité de ladite deuxième branche externe par rapport au fond de ladite deuxième cavité, permet de réaliser les soudages dans les meilleures conditions, car la masse d'acier de part et d'autre de la zone de soudage est sensiblement égale et la zone de fusion ne se trouve alors pas perturbée par une « effet radiateur » provoqué par la zone pleine et massive située entre les fonds desdites première et deuxième cavités, ladite perturbation consistant en un refroidissement déséquilibré entre la gauche et la droite de ladite zone de soudure.

Enfin, la continuité du diamètre de la paroi externe au niveau de la dite pièce de jonction par rapport à celui des parties courantes des conduites externes permet de créer une augmentation importante de l'inertie de la section transversale au niveau de la zone de raccordement de deux pièces de jonction adjacentes, et donc de renforcer le raccordement là ou précisément les contraintes sont maximales. En effet, l'inertie de la section transversale d'une conduite par rapport à son centre varie comme la puissance 4 du rayon, ce qui conduit à une épaisseur nécessaire considérable dans le cas de l'art antérieur tel que décrit dans GB-2,161,565 et GB-2,191,942. En revanche, si la section transversale considérée correspond à celle de la conduite externe du PiP, l'épaisseur nécessaire est fortement réduite, voire même dans certains cas divisée par deux, ce qui simplifie considérablement les opérations d'assemblage par soudage effectuées à bord des navires d'installation, dans des conditions difficiles.

D'autre part le fait que deux pièces de jonction adjacentes soient soudées, uniquement au niveau de l'extrémité desdites deuxième branches externes, permet que la totalité des phénomènes de transferts de charge et de contraintes soit localisée au niveau externe et n'implique pas lesdites parois internes, ce qui permet de mieux contrôler les risques de fissuration ou phénomènes de fatigue et d'éviter que le dispositif ne se ruine complètement au niveau de la paroi interne.

En outre, le fait que les deux extrémités desdites deuxièmes branches internes de deux pièces de jonction adjacentes assemblées, ne soient pas soudées entre elles, autorise des mouvements infimes desdites parois internes face à face dus à des éventuelles flexions ou variations de pression ou de température et autorise que lesdites parois internes puissent se déforment plastiquement et permettre un matage desdites deuxièmes branches internes sans risquer de transférer des charges de compression de contact, ce qui permet d'éviter de perturber la répartition des contraintes dans la zone d'assemblage et que l'essentiel des contraintes soit repris au niveau des parois externes desdites pièces.

La formation de ladite paroi interne cylindrique qui assure une continuité presque complète avec la conduite interne, permet d'éviter des phénomènes de turbulence du type vortex dans la circulation du fluide à l'intérieur du dispositif après assemblage, au niveau du raccordement de deux dites pièces de jonction de deux portions de PIP adjacentes

Toutes ces caractéristiques contribuent à améliorer radicalement le comportement en flexion, ainsi qu'en fatigue, d'un dispositif impliquant deux éléments d'ensemble coaxial équipé de dites pièces de jonction et raccordées l'une à l'autre, à bord des navires d'installation.

Par ailleurs, la fabrication et l'assemblage desdites pièces de jonction sont relativement aisés et fiables en ce qui concerne le raccordement de deux pièces de jonction adjacentes et le raccordement d'une pièce de jonction avec l'extrémité d'un ensemble de d'au moins deux conduites coaxiales.

Dans un mode de réalisation avantageux de EP-1 771 679, ladite deuxième branche interne comporte sur sa face frontale à son extrémité libre dans la direction longitudinale, un élément de centrage mâle ou femelle, apte à coopérer avec un élément, respectivement femelle ou mâle de l'extrémité libre d'une dite autre deuxième branche interne d'une autre dite pièce de jonction à laquelle elle est destinée à être assemblée, de manière à :
- assurer un effet de centrage des deux dites pièces de jonction lors de leur approche en vue de leur assemblage, et
- ajuster l'écartement e, e égal de 1 à 5 mm, de préférence 2 à 4 mm, des faces frontales d'extrémité des dites deuxièmes branches externes de dites pièces de jonction à assembler lors de leur approche en vue de leur assemblage pour que, de préférence, l'assemblage puisse se faire par soudure et que ladite soudure puisse être réalisée sur toute l'épaisseur desdites faces frontales des extrémités desdites deuxièmes branches externes destinées à être assemblées.

Dans un autre mode de réalisation avantageux, dans EP-1 771 679, l'épaisseur de ladite deuxième branche interne d'une des deux pièces de jonction assemblées bout à bout va en diminuant entre le fond de ladite deuxième cavité annulaire et ladite face frontale de ladite deuxième branche interne, la surface externe de ladite deuxième branche interne s'inscrivant ainsi dans une enveloppe tronconique et ladite deuxième branche interne présente une rigidité réduite par rapport à la deuxième branche interne de l'autre pièce de jonction à laquelle elle est assemblée.

Cette paroi interne amincie au niveau d'une des dites deuxièmes branches internes lui permet de jouer le rôle de butée éventuelle tout en autorisant plus facilement sa déformation plastique et son matage éventuel lors des mouvements de flexion ou des variations de pression ou de température, l'essentiel des contraintes étant quasi intégralement transmise au niveau de ladite deuxième branche externe.

Il en résulte que dans EP-1 771 679, ladite deuxième cavité n'est pas étanche après raccordement des deux pièces de jonction, vis-à-vis de l'intérieur de ladite paroi interne et de ladite conduite interne car lors du démarrage de la circulation d'un fluide à l'intérieur, celui-ci migre vers cette deuxième cavité, l'étanchéité de la conduite PiP étant assurée par la soudure externe au niveau de l'extrémité desdites deuxièmes branches externes, le fluide se trouvant piégé durant toute le durée de vie de l'installation au niveau de cette deuxième cavité.

Pour obtenir un effet de centrage optimal, dans EP-1 771 679, on décrit un mode de réalisation à la figure 2E, dans lequel les surfaces des deux dites deuxièmes branches internes coopérant entre elles en contact lors de l'assemblage des deux pièces de jonction, s'inscrivent dans une même enveloppe tronconique, les deux dites branches internes coopérant en contact ayant une même inertie et donc une même rigidité et leur surface de contact lors de l'assemble et après soudure des deux deuxièmes branches externes coïncident avec leur surface de chevauchement selon l'axe longitudinal XX', qui est au moins supérieur à la moitié de la longueur des dites deuxièmes branches internes.

Du fait de cette relativement grande surface de contact des deux dites deuxièmes branches internes, coïncidant avec leur zone de chevauchement, la contrainte de déformation élastique initiale au niveau de ladite surface de contact métal/métal est insuffisante et/ou inhomogène sur toute la surface créant ainsi des cheminements de fuite et une absence d'étanchéité des dites deuxièmes cavités, là encore.

On a découvert selon la présente invention que cette grande surface de contact et absence de déformation élastique au niveau de l'extrémité des dites deuxièmes branches internes coopérant en contact, nuit au retrait de la soudure lors de son refroidissement au niveau des extrémités des dites deuxièmes branches externes et en tout état de cause conduit à des contraintes de traction au niveau des dites soudures entre lesdites deuxièmes branches externes des deux pièces de jonction, lesquelles contraintes risquant d'affecter négativement le comportement en fatigue de la soudure et sa fiabilité mécanique dans le temps.

D'autre part, on a découvert selon la présente invention que le confinement de produits indésirables corrosifs, tels de l'eau saumâtre et plus particulièrement des eaux en provenance des puits, chargées en bactéries diverses, risquent au cours de l'exploitation de l'installation de produire des composés agressifs pour les installations au niveau des dites deuxièmes cavités annulaires et notamment au niveau des dites soudures des extrémités des dites deuxièmes branches externes des deux pièces de jonction assemblées, pouvant conduire à des incidents de corrosions localisées indésirables.

Le but de la présente invention est de fournir des pièces de jonction améliorées et un assemblage de pièces de jonction amélioré qui permettent de surmonter les inconvénients mentionnés ci-dessus.

Pour ce faire, la présente invention fournit un ensemble d'au moins deux conduites coaxiales constitué en partie courante d'une conduite externe et d'une conduite interne, délimitant un espace annulaire, comprenant de préférence un matériau d'isolation, constitué de l'assemblage d'éléments unitaires d'au moins deux conduites coaxiales, comprenant au moins deux éléments unitaires d'ensemble de conduites coaxiales, dont l'un comprend à au moins une extrémité une première pièce de jonction assemblée à une deuxième pièce de jonction à l'extrémité d'un autre dit élément unitaire d'ensemble de conduites coaxiales, chacune des deux dites première et deuxième pièces de jonction étant une pièce de jonction de révolution délimitée comme suit
- dans une direction radiale par rapport à un axe longitudinal XX' de révolution de ladite pièce, elle est délimitée par une paroi interne cylindrique sensiblement de même diamètre que celui de la partie courante de ladite conduite interne, et par une paroi externe cylindrique de diamètre sensiblement égal au diamètre externe de la partie courante de ladite conduite externe, et
- dans ladite direction axiale longitudinale XX',
   □ du côté de ladite pièce de jonction où elle est assemblée par soudage à l'extrémité desdites conduites externe et interne d'un dit élément unitaire d'un ensemble d'au moins deux conduites coaxiales, lesdites parois externe et interne de ladite pièce de jonction forment en section longitudinale des premières branches, de préférence des premières branches externe et respectivement interne sensiblement de même épaisseur que lesdites conduites externe et interne auxquelles elles sont assemblées, lesdites premières branches externe et interne délimitant une première cavité annulaire, et
   □ du côté de ladite pièce de jonction où elle est assemblée à une autre dite pièce de jonction, elle-même assemblée par soudage à l'extrémité dudit autre élément unitaire d'ensemble de deux conduites coaxiales, lesdites parois externe et interne forment en section longitudinale des deuxièmes branches respectivement externe et interne, délimitant une deuxième cavité interne annulaire,
      - les deux dites première et deuxième pièces de jonction étant soudées l'une à l'autre uniquement au niveau de l'extrémité de leur dites deuxièmes branches externes,
      - de préférence, les fonds desdites première et deuxième cavités étant espacés dans ladite direction longitudinale XX', de manière à délimiter une zone pleine massive de ladite pièce de jonction dans laquelle lesdites parois externe et interne forment les faces externe et interne d'une même paroi cylindrique, et
   - les extrémités desdites deux deuxièmes branches internes non soudées des dites première et deuxième pièces de jonction sont en contact métal/métal l'une avec l'autre sous contrainte de déformation élastique au niveau de leur surface de contact de révolution, de préférence conique, entre une première surface de révolution externe sur la face externe de la deuxième branche interne de la première pièce de jonction et une deuxième surface de révolution interne sur la face interne de la deuxième branche interne de la deuxième pièce de jonction, ladite deuxième branche interne de la première pièce de jonction formant une deuxième branche interne mâle située à l'intérieur de la deuxième branche interne femelle de la deuxième pièce de jonction,
   caractérisé en ce que ladite deuxième surface de révolution interne est de forme différente, mais de même axe de révolution (XX') que ladite première surface de révolution externe, de sorte que lesdites première surfacé de révolution externe et deuxième surface de révolution interne présentent, lorsque celles-ci sont disposées coaxialement et engagées en contact l'une contre l'autre, une ligne de contact initiale circulaire (do) se transformant en dite surface de contact après ladite contrainte de déformation élastique résultant du retrait de la soudure des extrémités des dites deuxièmes branches externes des dites deux pièces de jonction, de sorte que lesdites deuxièmes cavités internes sont étanches vis-à-vis de l'intérieur la conduite interne.

On comprend que l'expression « ligne de contact initiale circulaire » signifie que le contact entre les deux surfaces en coupe longitudinale axiale XX' est ponctuel et forme une ligne circulaire en coupe transversale dans le plan YZ lors de l'approche des deux conduites avant soudage. Le retrait de la soudure transforme alors cette ligne en surface de contact de révolution par déformation élastique conduisant alors à l'étanchéité métal/métal recherchée.

On entend ici par « interne » une branche ou une surface plus proche de l'intérieur de la conduite interne du PiP et par « externe » une surface ou branche plus proche de l'extérieur de la conduite externe du PiP Ainsi, ladite première surface de révolution externe est tournée vers ladite deuxième cavité annulaire et ladite deuxième surface de révolution interne est tournée vers l'intérieur de ladite conduite interne.

Ainsi, la présente invention propose de manière originale d'établir une étanchéité dans lesdites deuxièmes cavités internes, laquelle est rendue possible par la création d'un contact sous contrainte de déformation élastique des surfaces des dites deux branches internes en vis-à-vis, laquelle contrainte de déformation élastique permet que le retrait de la soudure de l'extrémité des dites deuxièmes branches externes s'effectue correctement.

Les moyens de détection d'une contrainte de déformation élastique sont connus de l'homme de l'art tel que la méthode par rayons X qui permet de mesurer les distances inter atomiques au niveau de la surface de la matière, et ainsi de caractériser de manière très précise l'état et le niveau de contrainte, qu'il soit de traction, de repos, ou de compression. De tels moyens sont disponibles auprès de la Société STRESSTECH (Finlande).

On comprend que :
- l'une desdites deuxièmes branches internes est en contrainte de déformation élastique sous traction, tandis que l'autre sera en contrainte de déformation élastique en compression au niveau de ladite zone de contact,
- la déformation élastique au niveau de ladite surface de contact ne doit pas être excessive, de manière à conserver un écart entre les extrémités des dites deuxièmes branches externes avant réalisation de la soudure, de manière à ce que l'assemblage de ces extrémités de deuxièmes branches externes puisse se faire sur toute l'épaisseur de leur face terminale frontale en vis-à-vis, et
- le serrage des deux pièces de jonction l'une contre l'autre se réalise grâce au retrait de la soudure des extrémités desdites deuxièmes branches externes après refroidissement.

Du fait de la coaxialité des dites première et deuxième surfaces de révolution et de leur ligne de contact initial ponctuel circulaire se transformant après contrainte de déformation élastique en surface de contact de révolution, de préférence conique, lors de l'approche des deux pièces de jonction, un effet d'autocentrage des deux pièces de jonction et une parfaite coaxialité entre les rames assemblées n et n-1, ainsi qu'un ajustement parfait et répétitif de l'espace « e » entre les faces frontales d'extrémité des branches externes des deux pièces de jonction forgées, autorisent l'exécution dans de parfaites conditions de la soudure entre lesdites faces frontales des branches externes des deux pièces de jonction.

Dans un mode préféré de réalisation :
- ladite deuxième branche interne de ladite première pièce de jonction forme une deuxième branche interne mâle à l'intérieur de la deuxième branche interne femelle de la deuxième pièce de jonction, et ladite deuxième branche interne mâle est de rigidité inférieure à la rigidité de la deuxième branche interne femelle, et
- lesdites première surface de révolution externe et deuxième surface de révolution interne sont en contact métal/métal résultant d'une déformation élastique sur une dite surface de contact, dont la dimension en projection dans la direction longitudinale axiale XX' est inférieure à la dimension D en projection dans la direction longitudinale axiale XX' de la zone de chevauchement entre les dite deuxième branche interne mâle et dite deuxième branche interne femelle.

Par « surface de révolution » on entend toute forme de surface de révolution présentant en coupe longitudinale axiale selon la direction longitudinale axiale XX' de la conduite, une forme parabolique, hyperbolique ou ellipsoïdale, de préférence circulaire, les dites surfaces de révolution pouvant être des ellipsoïdes, notamment des sphères, notamment des paraboloïdes ou hyperboloïdes et des surfaces d'enveloppe tronconique.

Du fait de la dimension relativement réduite de ladite surface de contact, il s'opère au niveau de celle-ci une contrainte de déformation élastique suffisante pour concomitamment créer une étanchéité métal-métal de ladite deuxième cavité interne résultant de la rétractation de la soudure des extrémités des dites deuxièmes branches externes des deux pièces de jonction lors du refroidissement de ladite soudure.

Et, du fait que ladite deuxième branche interne mâle présente une rigidité inférieure, on comprend que ladite contrainte de déformation élastique se produit essentiellement au niveau de cette deuxième branche interne mâle et plus précisément au niveau de ladite première surface de révolution externe.

La mise en oeuvred'une deuxième branche interne mâle de rigidité réduite disposée du côté de l'intérieur de la conduite interne par rapport à ladite deuxième branche interne femelle permet que la pression du fluide à l'intérieur de ladite conduite interne du PiP s'exerce contre ladite deuxième branche interne la moins rigide, venant ainsi en appui contre et étant supportée par ladite deuxième branche interne femelle la plus rigide, ce qui d'une part évite la déformation de ladite deuxième branche mâle vers l'intérieur de ladite deuxième cavité annulaire et donc évite la perte d'étanchéité de ladite deuxième cavité interne qui en résulterait. Il faut en effet que ladite deuxième branche interne la plus rigide soit du côté de la deuxième cavité interne pour d'une part favoriser la déformation élastique de ladite deuxième branche interne disposée du côté de la conduite interne (dénommée « deuxième branche interne mâle ») autorisant la rétractation de la soudure sans perte d'étanchéité au niveau de la deuxième cavité interne.

On comprend que si les deux branches internes sont réalisées en même matériau, la diminution de rigidité s'obtient par une diminution de son épaisseur.

Plus particulièrement, la longueur de génératrice d de ladite surface de contact de révolution entre lesdites première surface de révolution externe et deuxième surface de révolution interne est de 0.5 à 5 mm, de préférence de 2 à 4 mm.

Pour réaliser une dite zone de contact de dimensions réduites, on met en oeuvre des modes de réalisation dans lesquels les formes différentes des dites première surface de révolution externe et dite deuxième surface de révolution interne sont telles qu'elles conduisent, lorsque celles-ci sont disposées coaxialement et engagées en contact l'une contre l'autre à une ligne de contact ponctuel circulaire d₀ avant la contrainte de déformation élastique résultant du retrait de la soudure entre les extrémités des dites deuxièmes branches externe des deux pièces de jonction, lors de son refroidissement.

Plus particulièrement, ladite deuxième surface de révolution interne ne s'inscrit pas dans une même enveloppe tronconique que ladite première surface de révolution externe par « même enveloppe tronconique », on entend ici une enveloppe tronconique de même angle au sommet.

Dans une première variante de réalisation, ladite première surface de révolution externe est une surface tronconique dont le demi-angle au sommet α₁ est inférieur au demi-angle de sommet α₂ de ladite deuxième surface de révolution interne tronconique, α₁ et α₂ étant inférieurs à 45°, de préférence de 30 à 35°.

De préférence, pour obtenir une deuxième branche interne de rigidité réduite, l'épaisseur de ladite deuxième branche interne mâle de ladite première pièce de jonction va en diminuant depuis le fond de ladite deuxième cavité annulaire jusqu'à son extrémité longitudinale.

Dans une variante de réalisation avantageuse, l'extrémité longitudinale de ladite deuxième branche interne mâle de ladite première pièce de jonction comprend à son extrémité longitudinale du côté de sa face interne une terminaison biseautée inclinée d'un angle β par rapport à la direction longitudinale axiale, l'angle d'inclinaison β de ladite extrémité biseautée étant supérieur au demi-angle au sommet α₁ de ladite première surface de révolution externe tronconique.

Ce mode réalisation permet d'ajuster la raideur de ladite deuxième branche interne mâle de rigidité réduite de façon à ce que la rigidité de son extrémité soit ajustée en l'espèce légèrement augmentée par rapport à une extrémité non biseautée (c'est-à-dire une extrémité qui se termine avec une inclinaison α₁ par rapport à ladite direction longitudinale axiale. Cette rigidité de compromis entre une raideur excessive à laquelle la contrainte de déformation élastique serait insuffisante, n'autorisant pas le retrait de la soudure et une souplesse excessive qui ne permettrait pas d'ajuster l'écartement initial des extrémités des dites deuxièmes branches externes avant leur soudure.

Dans une autre variante de réalisation, ladite première surface de révolution externe présente une forme tronconique se poursuivant à l'extrémité la plus mince de ladite deuxième branche interne par une surface torique de même axe de révolution XX', à convexité tournée vers ladite deuxième surface de révolution interne de forme tronconique.

On comprend que les demi-angles α₁ et α₂ au sommet des dites premières surfaces tronconiques et deuxièmes surfaces tronconiques doivent être telles que lesdites première surface de révolution interne et deuxième surface de révolution externe ne rentrent pas en contact entre elles, et donc n'interfèrent pas entre-elles, en dehors de ladite surface torique à l'extrémité de ladite première surface de révolution externe. Ceci sera toujours le cas si ledit angle au sommet α₁ de ladite première surface de révolution externe est inférieur ou égal à l'angle au sommet α₂ de ladite deuxième surface de révolution interne tronconique. Mais, ceci pourra être également le cas si l'angle α₁ de ladite première surface de révolution externe dans sa partie tronconique est supérieur au demi-angle de sommet α₂ de ladite deuxième surface de révolution interne tronconique.

De préférence encore, l'extrémité de la deuxième branche interne de la première pièce de jonction est en retrait dans ladite direction longitudinale axiale XX' par rapport à l'extrémité de la deuxième branche externe de la première pièce de jonction et l'extrémité de la deuxième branche externe de la deuxième pièce de jonction est en retrait dans la direction longitudinale axiale XX' par rapport à l'extrémité de la deuxième branche interne de la deuxième pièce de jonction, laquelle est de rigidité supérieure à la deuxième branche interne de la première pièce de jonction.

Ce mode de réalisation permet de protéger l'extrémité de rigidité réduite de la deuxième branche interne de la première pièce de jonction 1a lors de l'assemblage des deux pièces de jonction.

La présente invention fournit également un procédé d'assemblage d'un ensemble d'au moins deux conduites coaxiales selon l'invention, caractérisé en ce que :
1) on assemble de préférence dans une tour de pose en « J », un premier ensemble de conduites coaxiales n-1, de préférence incliné en suspension à l'extrémité inférieure dans une dite tour de pose en « J », comportant une dite première pièce de jonction à son extrémité en amont, avec un deuxième dit élément unitaire d'ensemble de conduites coaxiales n, de préférence incliné à l'extrémité inférieure d'une dite tour de pose en « J », comportant une dite deuxième pièce de jonction différente de ladite première pièce de jonction à son extrémité avale, de telle sorte que le premier contact de ladite deuxième pièce de jonction avec ladite première pièce de jonction se réalise au niveau d'une ligne de contact circulaire d₀ entre ladite première surface de révolution externe et dite deuxième surface de révolution interne, les deux dites deuxièmes branches externes des deux dites première et deuxième pièces de jonction étant de préférence de même épaisseur, les faces frontales d'extrémité des dites deuxièmes branches externes des deux dites première et deuxième pièces de jonction étant espacées d'une distance e d'au moins 1 mm, de préférence de 2 à 5 mm, et
2) on réalise le soudage entre elles des faces frontales et des chanfreins des extrémités libres des seules dites deuxièmes branches externes des dites première et deuxième pièces de jonction des deux dits éléments unitaires de conduites n-1, n.

Ainsi, après rétractation de la soudure, on obtient une étanchéité métal/métal résultant d'une contrainte de déformation élastique au niveau de la zone de contact entre les deux dites première surface de révolution externe de ladite deuxième branche interne mâle et respectivement deuxième surface de révolution interne de ladite deuxième branche interne femelle.

Selon des caractéristiques préférées et avantageuses de la présente invention :
- l'extrémité libre de ladite deuxième branche externe présente une forme de préférence un chanfrein, la rendant apte à être soudée à l'extrémité libre d'une autre dite deuxième branche externe d'une autre pièce de jonction à laquelle elle est destinée à être assemblée, ladite autre pièce de jonction étant, elle-même, assemblée à l'extrémité d'un deuxième dit élément d'ensemble de deux conduites coaxiales, et
- les deux dites deuxièmes branches externes des deux dites pièces de jonction destinées à être assemblées par soudure sont de même épaisseur, et d'épaisseur supérieure à l'épaisseur de la conduite externe du PiP, et de préférence d'épaisseur supérieure à l'épaisseur de ladite deuxième branche interne de ladite pièce de jonction, et
- l'extrémité de ladite deuxième branche externe présente un chanfrein tourné vers l'extérieur, apte à permettre une soudure depuis l'extérieur ;
- les extrémités libres desdites premières branches externe et interne présentent une forme, de préférence en chanfrein, les rendant aptes à être soudées aux extrémités libres respectivement desdites conduites externe et interne, de préférence aptes à être soudées respectivement depuis l'extérieur de la dite conduite externe pour lesdites premières branches externes et depuis l'intérieur de ladite conduite interne pour lesdites premières branches internes.

Dans un mode de réalisation particulier, lesdites première et deuxième cavités annulaires présentent une forme oblongue en section longitudinale, les fonds présentant une forme incurvée dont les rayons de courbure sont, de préférence, identiques.

Plus particulièrement encore :
- les fonds desdites première et deuxième cavités, sont espacés d'une longueur de 0.5 à 5 fois l'épaisseur maximale de ladite pièce de jonction forgée dans ladite zone pleine,
- la longueur desdites premières branches interne et externe forme une dite première cavité d'une profondeur de 1 fois à 5 fois l'épaisseur des conduites interne et respectivement externe, et
- la longueur desdites deuxièmes branches externe et interne forme une dite deuxième cavité d'une profondeur de 1 fois à 5 fois l'épaisseur de ladite deuxième branche externe, et
- l'épaisseur desdites deuxièmes branches externes étant supérieure de 5 à 100%, de préférence de 30 à 70% de l'épaisseur de la conduite externe.

Selon des caractéristiques particulières d'un procédé d'assemblage de deux éléments d'ensemble de deux conduites coaxiales selon l'invention :
- la longueur de dépassement de l'extrémité desdites deuxièmes branches interne et externe l'une par rapport à l'autre d'une dite première pièce de jonction, est apte à s'adapter à la longueur de dépassement de l'extrémité desdites deuxièmes branches interne et externe l'une par rapport à l'autre d'une dite deuxième pièce de jonction à laquelle ladite première pièce de jonction est assemblée, et
- lesdites deuxièmes branches externe et interne de chacune des deux dites pièces de jonction sont telles que leurs extrémités sont sensiblement au même niveau dans ladite direction longitudinale axiale XX'.

D'autres caractéristiques et avantages de la présente invention apparaîtront à la lumière de la description détaillée qui va suivre, en référence aux figures suivantes dans lesquelles :
- La figure 1A est une coupe longitudinale axiale d'une rame n-1 de PIP 1, comportant une première pièce de jonction 1a soudée à son extrémité,
- La figure 1B est une coupe longitudinale axiale de la seconde extrémité de la même rame de PiP 1 selon la figure 1A, comportant une deuxième pièce de jonction 1b soudée à son extrémité,
- La figure 2 est une coupe longitudinale axiale du raccordement de deux longueurs de PiP n et n-1 équipées chacune d'une pièce de jonction 1a (n-1) et respectivement 1b (n) à leurs extrémités,
- Les figures 2A et 2B représentent des variantes de réalisation des extrémités de la deuxième branche interne 5₂a de la première pièce de jonction 1a et de son contact avec la deuxième branche interne 5₂b de la deuxième pièce de jonction 1b,
- Les figures 3, 3A et 3B détaillent l'évolution du point de raccordement de l'extrémité de la première pièce de jonction 1a de la figure 2A, respectivement en fin de phase d'approche des deux éléments unitaires de conduite n-1,n, lorsque la rame supérieure n repose sur la rame inférieure n-1 (Fig. 3A), et après retrait du métal de soudage lorsque la soudure a refroidi (Fig. 3B),
- Les figures 4, 4A et 4B détaillent l'évolution du point de raccordement des extrémités des pièces de jonction de la figure 2B, respectivement en fin de phase d'approche des deux éléments de conduite, puis lorsque la rame supérieure repose sur la rame inférieure (Fig. 4A) et après retrait du métal lorsque la soudure a refroidi (Fig. 4B),
- La figure 5 représente une variante de réalisation préférée de l'extrémité de la deuxième branche interne 5₂a de la première pièce de jonction 1a, ladite extrémité étant en retrait dans la direction XX' par rapport à l'extrémité de la deuxième branche externe 5₁.
- La figure 5A représente un mode de réalisation comparatif de la figure 3 dans lequel l'étanchéité de la cavité 6 ne serait pas correctement assurée en cours d'opération lorsque la pression du fluide à l'intérieur 2₅ de la conduite interne 2₂ circulerait sous pression venant déformer l'extrémité mince non soutenue de la deuxième branche interne 5₂a de la première pièce de jonction 1a se déformant vers l'intérieur de la cavité 6.
- La figure 6 est une vue de côté d'un navire d'installation 13 de conduites sous-marines équipé d'une tour de pose en J 12,
- La figure 6A illustre l'approche d'une nouvelle rame n vers la partie de conduite déjà assemblée n-1 en suspension au sein d'une tour de pose en J,
- La figure 6B illustre le soudage de ladite nouvelle rame n sur la conduite en suspension n-1 au sein d'une tour de pose en J à son extrémité inférieure.

Les pièces de jonction 1a, 1b de révolution et sensiblement cylindriques selon l'invention, sont destinées à la jonction de deux éléments unitaires n-1 et n d'un ensemble d'au moins deux conduites coaxiales, comprenant une conduite externe 2₁ contenant une conduite interne 2₂ délimitant un espace annulaire 2₃ contenant un matériau d'isolation 2₄, l'espace annulaire étant de préférence sous pression réduite de gaz, lesdits éléments étant appelés ci-après longueur unitaire de PiP.

Lesdites pièces de jonction 1a et 1b sont délimitées comme suit :
■ dans une direction radiale par rapport à un axe longitudinal XX' de révolution de ladite pièce, elle est délimitée par une paroi interne cylindrique 1₂ sensiblement de même diamètre que celui de la partie courante de ladite conduite interne 2₂, et par une paroi externe 1₁ cylindrique de diamètre sensiblement égal au diamètre externe de la partie courante de ladite conduite externe 2₁, et
■ dans la direction axiale longitudinale XX',
   - du côté de ladite pièce de jonction destiné à être assemblé par soudage 9 à l'extrémité desdites conduites externe et interne d'un dit élément d'un ensemble d'au moins deux conduites coaxiales, lesdites parois externe 1₁ et interne 1₂ de ladite pièce de jonction forment en section longitudinale des premières branches respectivement externe 3₁ et interne 3₂ sensiblement de même épaisseur que lesdites conduites externe 2₁ et interne 2₂ auxquelles elles sont destinées à être assemblées, lesdites premières branches externe 3₁ et interne 3₂ délimitant une première cavité annulaire 4, et
   - du côté opposé de ladite pièce de jonction destiné à être assemblé à une autre dite pièce de jonction, elle-même assemblée par soudage 9 à l'extrémité d'un autre élément d'ensemble de deux conduites coaxiales, lesdites parois externe 1₁ et interne 1₂ forment en section longitudinale des deuxièmes branches respectivement externe 5₁ et interne 5₂, délimitant une deuxième cavité annulaire 6,
   - les fonds 4₁, 6₁ desdites première et deuxième cavités 4, 6 étant espacés dans ladite direction longitudinale XX', de manière à délimiter une zone pleine massive 10 de ladite pièce de jonction dans laquelle lesdites parois externe 1₁ et interne 1₂ forment les faces externe et interne d'une même paroi cylindrique.

Chaque dit élément unitaire de l'ensemble de conduites coaxiales 1, n-1 et n comprend deux dites première pièce de jonction 1a et respectivement deuxième pièce de jonction 1b différentes respectivement à chaque extrémité.

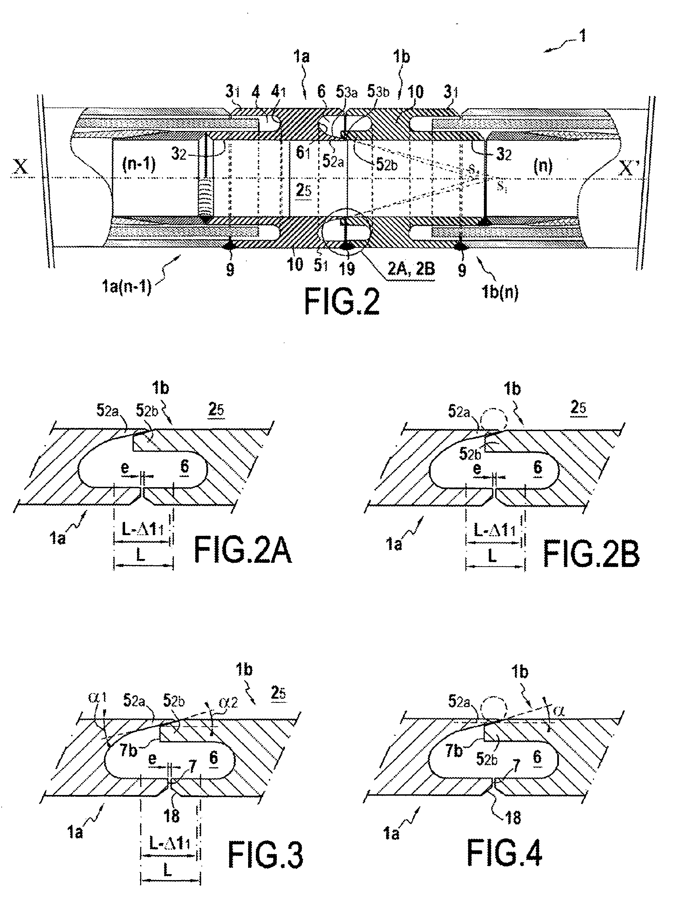

Comme montré sur la figure 2, la première cavité annulaire 4 est ouverte sur l'espace annulaire 2₃ et peut recevoir le matériel d'isolation 2₄ de façon à continuer l'isolation de la conduite le plus loin possible.

Sur les figures 2 et suivantes, l'extrémité amont d'une première longueur unitaire de PiP n-1 est équipée d'une première pièce de jonction 1a et l'extrémité avale d'une deuxième longueur de PiP n est équipée d'une deuxième pièce de jonction 1b. Les extrémités du côté de leur face frontale 7 et dites deuxièmes branches externes 5₁ de chacune des dites première et deuxième pièce de jonction 1a et 1b sont de même forme et sont raboutées et soudées l'une à l'autre. En revanche, les dites deuxièmes branches internes 5₂a et 5₂b des deux première et respectivement deuxième pièces de jonction 1a et 1b sont de formes différentes et leurs extrémités ne sont pas soudées l'une à l'autre.

Ladite deuxième branche interne 5₂a de la première pièce de jonction 1a en amont de la dernière longueur unitaire de la conduite PiP déjà assemblée présente une épaisseur diminuant continument depuis le fond 6₁ de ladite deuxième cavité 6 vers son extrémité libre en amont. Cette deuxième branche interne 5₂a de ladite première pièce de jonction 1a présente du côté de son extrémité libre 7a une surface de révolution externe 5₃a de forme conique de demi-angle au sommet α₁ d'environ 30°, et une surface interne 5₂c -c'est-à-dire tournée vers l'intérieur 2₅ de la conduite interne 2₂- de forme cylindrique, lesdites surfaces de révolution 5₃a et cylindrique 5₂c étant de même axe XX' que celui de la conduite PiP.

La deuxième branche interne 5₂b de la deuxième pièce de jonction 1b à l'extrémité avale d'une nouvelle longueur unitaire de conduite PiP ou d'une nouvelle rame n à assembler sur ladite première pièce de jonction 1a, présente une forme différente, à savoir qu'elle présente une réduction d'épaisseur à son extrémité libre, mais son épaisseur ne diminue pas depuis le fond 6₁ de sa dite deuxième cavité 6 comme c'est le cas pour la deuxième branche interne 5₂a de la première pièce de jonction.

Globalement, l'épaisseur de ladite deuxième branche interne 5₂b de la deuxième pièce de jonction 1b est supérieure et présente une rigidité et une inertie plus importantes que celles de ladite deuxième branche interne 5₂a de la première pièce de jonction 1a.

D'autre part, l'extrémité de la deuxième branche interne 5₂b de la deuxième pièce de jonction 1b présente une deuxième surface de révolution interne 5₃b de demi-angle au sommet α₂ supérieur à α₁ et venant s'appliquer en vis-à-vis de ladite première surface de révolution externe 5₃a de ladite deuxième branche interne 5₂a de la première pièce de jonction 1a. La première pièce de jonction 1a vient donc avec sa deuxième branche interne 5₂a du côté interne à la conduite par rapport à la deuxième branche interne 5₂b de la deuxième pièce de jonction 1b contre laquelle elle est en contact métal/métal lorsque leurs dites deuxièmes branches externes 5₁ sont assemblées par soudage 19. Ainsi, la première pièce de jonction 1a et sa deuxième branche interne 5₂a constituent une première pièce de jonction mâle et respectivement une deuxième branche interne mâle 5₂a tandis que la deuxième pièce de jonction 1b et sa deuxième branche interne 5₂b constituent une pièce de jonction femelle et respectivement une deuxième branche interne femelle.

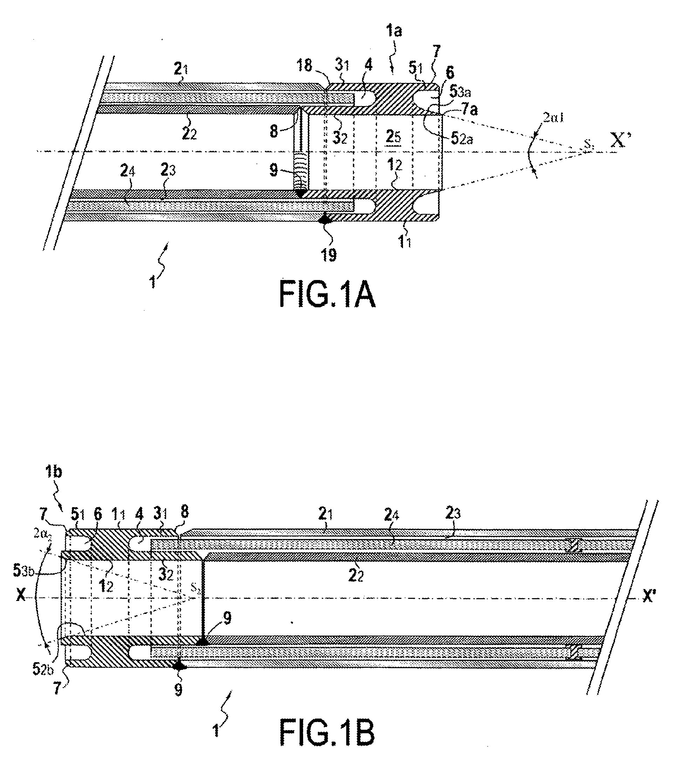

Sur les figures 1 et 2, les extrémités libres des deuxièmes branches internes 5₂a,5₂b dépassent des extrémités libres des premières branches externes 5₁ des deux pièces de jonction, de façon à ce que le chevauchement de la première surface de révolution externe tronconique 5₃a de la première pièce de jonction 1a chevauche la deuxième surface de révolution interne tronconique 5₃b de la deuxième branche interne 5₂b de la deuxième pièce de jonction 1b, comme explicité ci-après.

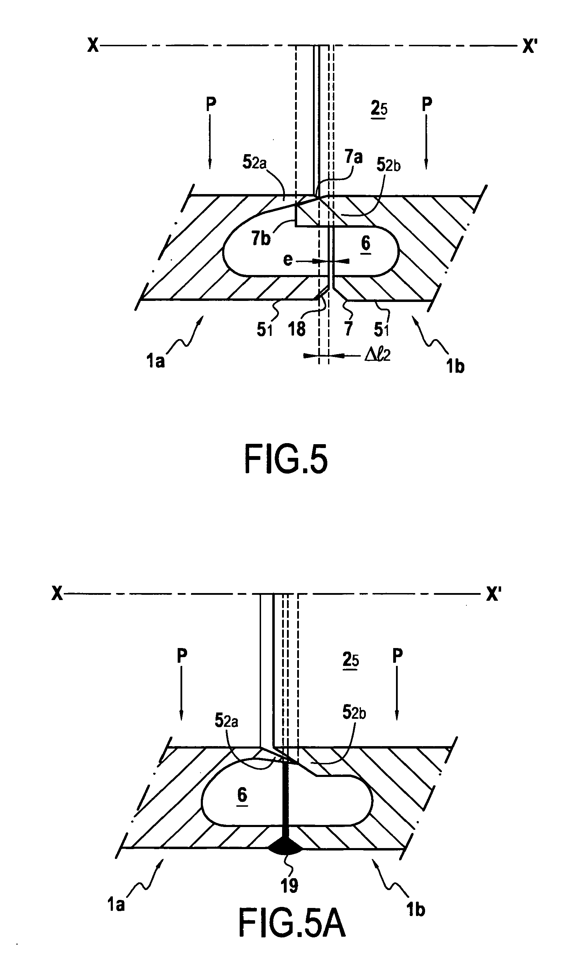

Dans un mode préféré de réalisation illustré sur la figure 5, la deuxième branche interne 5₂a de la première pièce de jonction 1a présente une épaisseur diminuant progressivement depuis le fond 6₁ de la cavité 6 vers son extrémité libre. Et, l'extrémité libre de la deuxième branche interne 5₂a est en retrait ΔI₂ dans la direction longitudinale XX' par rapport à la face frontale 7 de l'extrémité libre de la deuxième branche externe 5₁ de la même première pièce de jonction 1a de façon à ce que l'extrémité 7a de la deuxième branche interne 5₂a relativement plus fragile soit protégée lors de la phase d'assemblage avec la deuxième pièce de jonction 1b. Dans ce mode de réalisation de la figure 5, pour permettre le chevauchement des deux deuxièmes branches internes 5₂a et 5₂b des première et deuxième pièces de jonction 1a, 1b, l'extrémité de la deuxième branche interne 5₂b de la deuxième pièce de jonction 1b est en avant par rapport à l'extrémité de la deuxième branche externe 5₁ de la deuxième pièce de jonction.

Selon la présente invention, la deuxième branche interne 5₂a de la première pièce de jonction mâle la est disposée vers l'intérieur 2₅ de la conduite par rapport à la deuxième branche interne 5₂b de la deuxième pièce de jonction femelle 1b de façon à ce que la pression interne du fluide circulant à l'intérieur 2₅ de la conduite PiP ne vienne pas déformer la deuxième branche interne 5₂a comme ce serait le cas dans un mode de réalisation comparatif représenté sur la figure 5A. Sur la figure 5A, la deuxième branche interne 5₂a de plus petite épaisseur et moindre rigidité est située du côté externe, c'est-à-dire vers la cavité interne 6 par rapport à la deuxième branche interne 5₂b de la deuxième pièce de jonction 1b, cette dernière faisant alors office de pièce de jonction mâle par rapport à une première pièce de jonction la femelle.

Après assemblage et raccordement de deux longueurs unitaires de PiP équipées de pièces de jonction forgées selon l'invention, la deuxième cavité annulaire 6 d'une première pièce de jonction la à l'extrémité amont d'une première longueur de PiP est ouverte sur une deuxième cavité annulaire d'une deuxième pièce de jonction 1b à l'extrémité aval d'une deuxième longueur de PiP formant ainsi une chambre formée par soudage au niveau des extrémités des deuxièmes branches externes 5₁.

Cette chambre 6 est étanche, car l'extrémité des deuxièmes branches internes 5₂a et 5₂b des deux pièces de jonction 1a et 1b bien que non soudées entre elles présentent des surfaces 5₃a et 5₃b en vis-à-vis induisant une zone de contact 11, de contact métal/métal sous contrainte de déformation élastique comme explicité ci-après.

Les extrémités libres desdites premières branches externe 3₁ et interne 3₂ présentent une forme, en chanfrein 8, ce qui permet d'effectuer de manière connue une première passe de soudage dite « de pleine pénétration », suivi d'un remplissage complet du chanfrein comme explicité en 9. Sur la figure 1A, les chanfreins 8 sont tournés vers l'extérieur et sont donc aptes à être soudés depuis l'extérieur desdites conduites externe 3₁ et interne 3₂. Sur la figure 1B, les chanfreins 8 sont tournés vers l'extérieur à l'extrémité de ladite première branche externe et vers l'intérieur à l'extrémité de ladite première branche interne, les rendant aptes à être soudés respectivement depuis l'extérieur dudit ensemble pour lesdites premières branches externes et depuis l'intérieur de ladite conduite interne pour lesdites premières branches internes.

Pour la clarté de la description sur les figures 1A, 1B et 2, les divers éléments constitutifs ont été représentés soudés en partie basse des dessins, et en partie haute, positionnés face-à-face avant réalisation desdites soudures 9.

Sur la figure 2, les extrémités libres de ladite deuxième branche externe 5₁ présentent une forme en chanfrein 18 tourné vers l'extérieur d'une première pièce de jonction 1a la rendant apte à être soudée depuis l'extérieur à l'extrémité libre d'une autre dite deuxième branche externe d'une autre pièce de jonction 1b à laquelle elle est destinée à être assemblée, ladite autre pièce de jonction étant, elle-même, à l'extrémité d'un deuxième élément d'ensemble de deux conduites coaxiales.

Dans lesdites première et deuxième pièces de jonction forgées 1a et 1b, l'extrémité de ladite première branche interne 3₂ du côté de ladite pièce de jonction apte à être directement assemblée à un dit élément d'un dit ensemble de conduites coaxiales, dépasse dans ladite direction longitudinale axiale XX' par rapport à l'extrémité d'une dite première branche externe 3₁, de manière à ce que lesdites pièces de jonction puissent être assemblées par soudage à un dit ensemble de conduites coaxiales dont l'extrémité de ladite conduite externe dépasse par rapport à celle de ladite conduite interne.

Dans une version préférée de l'invention, lesdites première et deuxième pièces de jonction forgées 1a-1b sont réalisées comme explicité sur la figure 2 et présentent un diamètre externe et une épaisseur de paroi sensiblement égaux, de préférence égaux, à celui de la portion courante d'enveloppe externe. En procédant ainsi, la conduite présente sur toute sa longueur une inertie sensiblement constante, ce qui évite les accumulations de contraintes au niveau des raccordements entre deux longueurs unitaires de PiP et améliore considérablement le comportement en flexion et en fatigue de la conduite et lui permet alors de résister, surtout dans le cas des liaisons fond-surface soumises aux effets de la houle et du courant, pendant toute la durée de vie des installations qui atteint et dépasse 30 ans.

Pour éviter les phénomènes de vortex indésirables au niveau du raccordement de deux pièces de jonction forgées 1a-1b de deux portions de PiP adjacentes, lorsque le pétrole brut circule à l'intérieur de la conduite interne, le diamètre interne de la pièce de jonction forgée 1a est prolongé jusqu'à la face de jonction avec son correspondant 1b, mais la jonction n'est pas soudée, de manière à éviter les phénomènes de transfert de charge et de contraintes entre l'enveloppe externe et la conduite interne, ce qui risquerait de conduire à des fissurations ou des phénomènes de fatigue qui ne manqueraient pas de ruiner complètement la conduite. Les deux prolongations de la partie interne on donc un simple rôle de continuité du diamètre interne de la conduite interne et elles peuvent être usinées de multiples manières.

Sur la figure 1A, on a représenté en coupe longitudinale une première pièce de jonction 1a à l'extrémité amont d'une rame d'extrémité d'une conduite déjà assemblée n-1 présentant au niveau de l'extrémité libre de sa deuxième branche interne 5₂a un premier usinage conique formant une première surface de révolution externe 5₃a tronconique de sommet S₁ et de demi angle au sommet α₁.

Sur la figure 1B, on a représenté en coupe longitudinale une extrémité d'une deuxième pièce de jonction 1b d'une nouvelle rame n présentant au niveau de l'extrémité de sa branche interne 5₂b un deuxième usinage conique formant une deuxième surface de révolution 5₃b de forme tronconique de sommet S₂ et de demi angle au sommet α₂, la deuxième branche interne 5₂b étant plus épaisse et donc plus rigide que la deuxième branche interne 5₂a.

Les angles α₁ et α₂ sont tels que α₁ < α₂, la différence des angles étant de 0.5 à 5°, de préférence 1 à 2°, α₁ étant de préférence égal à 30°. Ainsi, lors de l'approche de la rame n vers la rame n-1 selon un axe longitudinal axial XX', l'extrémité conique femelle de la deuxième surface de révolution interne 5₃b conique de la rame n, vient collaborer avec l'extrémité aval conique mâle de la première surface de révolution externe conique 5₃a de la rame n-1, en la recouvrant du côté externe, c'est-à-dire du côté de ladite cavité interne 6. Il en résulte une coaxialité parfaite des deux portions de conduites sans avoir à effectuer d'ajustement latéral. Les dites premières surface de révolution externe 5₃a de la première pièce de jonction 1a d'une part et d'autre part, deuxième surface de révolution interne 5₃b de la deuxième branche 5₂b de la deuxième pièce de jonction 1b sont usinées de manière à ajuster les angles α₁ et α₂ des cônes de sommet S₁ et S₂ de telle sorte que lors du chevauchement, les faces frontales d'extrémité 7 des deuxièmes branches externes 5₁ des deux pièces de jonction 1a et 1b après approche de la rame n vers la rame n-1 des contacts des deux surfaces 5₃a et 5₃b, les faces frontales 7 des deux branches externes 5₁ sont espacées l'une de l'autre d'une distance e optimale de 1 à 4 mm pour réaliser la soudure 19 d'assemblage.

L'écartement des faces parallèles frontales 7 des deux chanfreins 18 à l'extrémité des deux deuxièmes branches externes 5₁ des deux pièces de jonction 1a,1b, doit être extrêmement précis pour que la soudure 19 entre les extrémités des deux deuxièmes branches externes 5₁ puisse être réalisée, de manière connue, en pleine pénétration et ainsi présenter une résistance optimale.

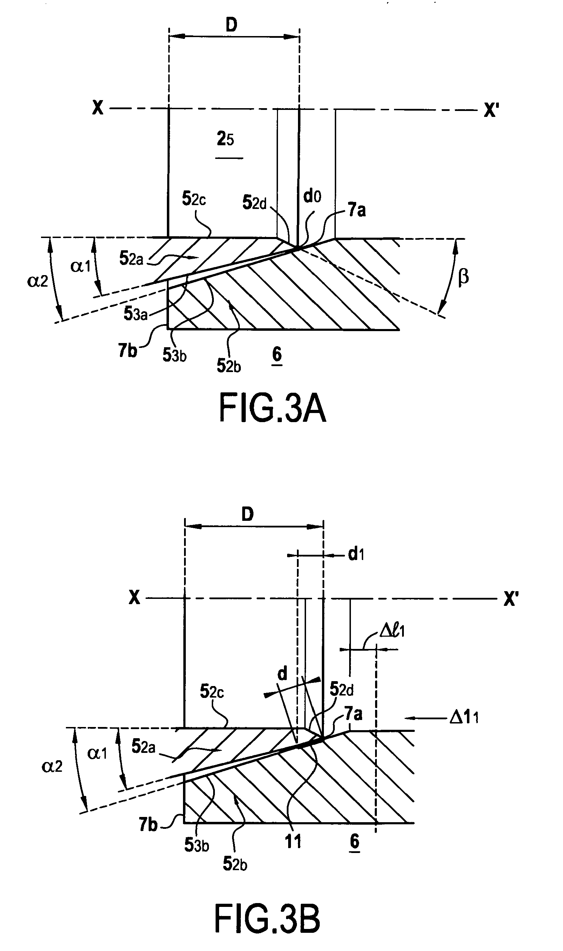

Sur la figure 3 on a représenté en coupe une vue du raccordement entre les deux cônes mâle S₁ et femelle S₂ au niveau de l'extrémité des pièces forgées 1a et 1b.

Sur la figure 3A, la rame n et en phase d'approche de la rame n-1, l'extrémité libre de la deuxième branche interne 5₂a de la première pièce de jonction 1a vient juste en contact ponctuel d₀ avec l'extrémité libre de la deuxième branche interne 5₂b de la deuxième pièce de jonction 1b. La distance de contact en section longitudinale ou en projection sur l'axe XX' est ponctuelle, c'est-à-dire qu'à proximité des extrémités 7a,7b desdites deuxièmes branches internes 5₂a et 5₂b, le contact entre les surfaces 5₃a et 5₃b est initialement limité à la trace d₀ d'un cercle.

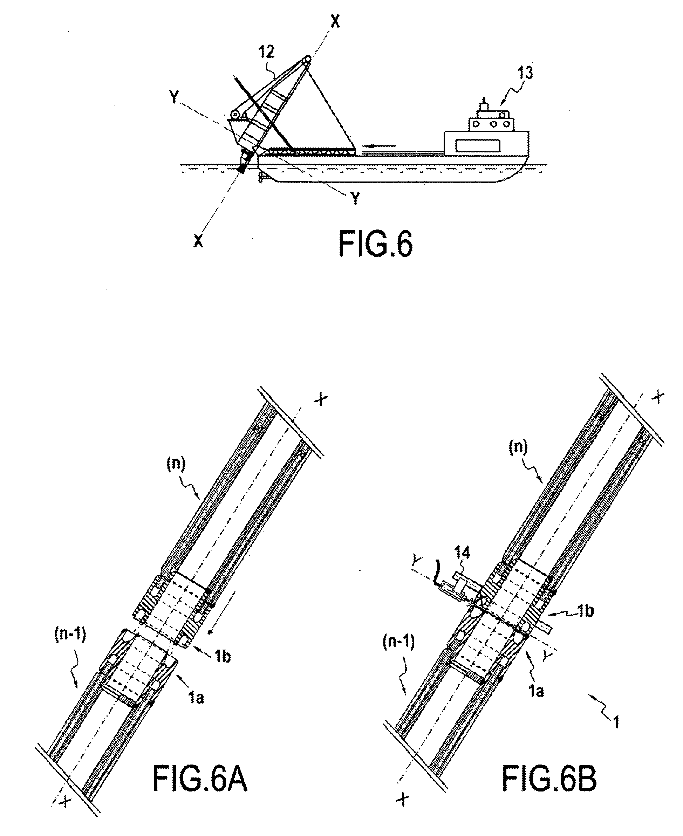

Sur la figure 3B, la rame n repose sur la rame n-1, l'ensemble étant en position inclinée au sein d'une tour de pose en J 12 installée à bord d'un navire de pose 13, comme illustré sur les figures 6 et 6A. Ainsi, l'ensemble étant incliné, la rame n appuie de son poids sur la rame n-1, et la zone de contact entre les cônes mâle S₁ et femelle S₂ s'agrandit légèrement de par la contrainte de déformation élastique des surfaces 5₃a et 5₃b et constitue alors une surface de contact 11 sensiblement conique de faible largeur d. Cette surface de contact 11 est due à une déformation élastique des parois respectives 5₃a et 5₃b desdits cône mâle S₁ et cône femelle S₂, et essentiellement une déformation élastique de la paroi la moins rigide du cône mâle S₁.

L'approche étant terminée, on effectue, de manière connue, la soudure circulaire externe, à l'aide d'un dispositif orbital 14 comme illustré sur la figure 6B, et après refroidissement de ladite soudure, le retrait dû au refroidissement de la soudure déplace légèrement d'une valeur ΔI₁ la rame n vers la rame n-1, ce qui a pour effet d'augmenter la largeur d de la surface de contact 11 entre le cône mâle 5₃a et cône femelle 5₃b jusqu'à une valeur d de 0.5 à 5 mm, de préférence de 2 à 4 mm. Cette surface de contact 11 est due à une déformation élastique des parois respectives desdits cône mâle 5₃a et cône femelle 5₃b, la déformation élastique du cône mâle S₁ 5₃a étant beaucoup plus prononcé, car sa section en extrémité est beaucoup moins massive et résistante que celle du cône femelle S₂ 5₃b.

Le retrait ΔI₁ de la soudure 19 des extrémités des deuxièmes branches externes 5₁ des deux pièces de jonction 1a et 1b dépend des caractéristiques de la conduite, mais il est de l'ordre du millimètre, ce qui engendre la formation d'une zone de contact conique 11 de l'ordre de d = 2 à 4 mm selon l'angle α, valeur moyenne des angles des deux cônes mâle et femelle.

Du fait que les deux pièces forgées 1a et 1b ont usinées avec précision et répétitivité d'une pièce à l'autre, de cette déformation élastique périphérique il en résulte une étanchéité métal-métal entre les extrémités de la rame n et de la rame n-1, au niveau de la conduite interne.

Et, du fait que les déformations restent dans le domaine élastique, il en résulte une étanchéité parfaite pendant toute la durée de vie de la conduite, évitant ainsi, dans certaines conditions critiques d'exploitation, le remplissage de l'espace 6 situé entre les branches internes 5₂a,5₂b et externes 5₁ des extrémités des première et deuxième pièces de jonction 1a et 1b.

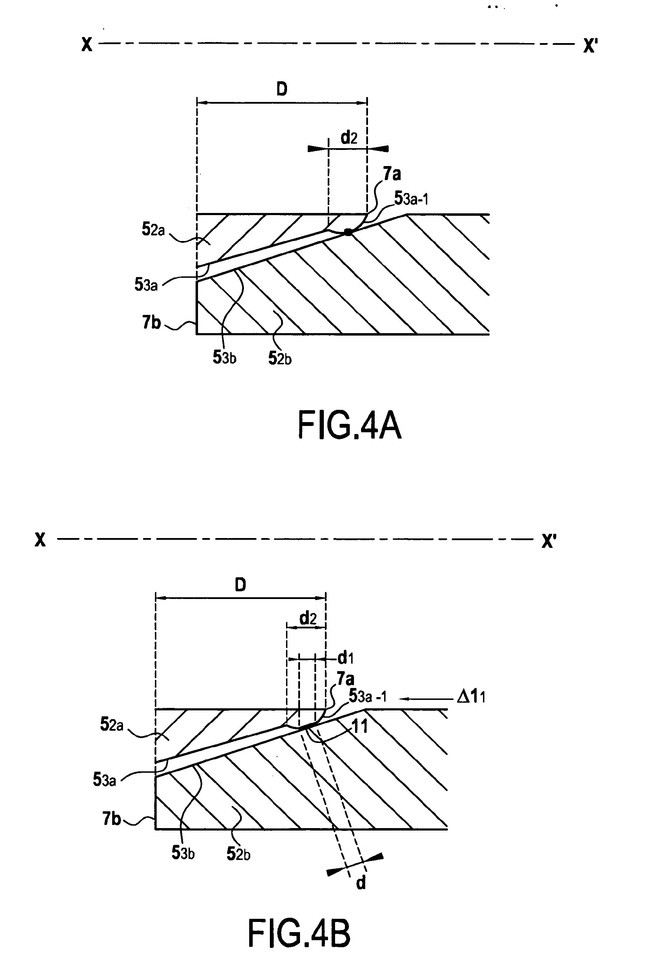

Sur les figures 4 et 4A, on a représenté une variante 5₃a-1 de l'usinage de l'extrémité de la première surface de révolution externe 5₃a de la deuxième branche interne 5₂a de la première pièce de jonction 1a. En effet, si la deuxième surface de révolution interne 5₃b de la deuxième branche interne 5₂b de la deuxième pièce de jonction 1b est usinée en forme de cône 5₃b de somme S₂ et d'angle α₂, l'extrémité de la première surface de révolution externe 5₃a de la première pièce de jonction 1a est usinée au niveau de la future zone de contact 11, non pas en cône mais en forme de portion de tore 5₃a-1 de même axe XX', de préférence à section longitudinale elliptique, de préférence encore à section longitudinale circulaire. Ainsi en fin de phase d'approche comme représenté sur la figure 4A, le contact périphérique se limite toujours à un cercle, mais lorsque la rame n repose sur la rame n-1, la surface de contact 11 entre les deux surfaces 5₃a et 5₃b est toujours sensiblement une trace ponctuelle d₀ en forme de cercle. Et, après soudage et refroidissement de la soudure 19, du fait de la contrainte de déformation élastique au niveau du contact entre les extrémités 5₃a-1 et la surface 5₃b, la surface de contact 11 devient toujours sensiblement une portion de cône de longueur de génératrice d comme illustré sur la figure 4B, rendant ainsi parfaitement étanche le volume de la chambre formée par les deux cavités 6 compris entre les deuxièmes branches internes 5₂a,5₂b et externes 5₁ de deux pièces 1a et 1b forgées complémentaires. La longueur d est telle que sa longueur d₁ en projection sur l'axe XX' reste toujours inférieur à la longueur D de projection sur l'axe XX' de la zone de chevauchement entre lesdites première et deuxième surfaces de révolution 5₃a et 5₃b des deux branches internes 5₂a et 5₂b des deux pièces de jonction 1a et 1b assemblées, et inférieure à la longueur d₂ de projection sur XX' de la première surface de révolution interne 5₃a torique.

Cette terminaison 5₃-1 torique de la première surface de révolution externe 5₃a permet d'épaissir un peu la terminaison de la deuxième branche interne 5₂a la moins rigide et donc la plus fragile et ainsi d'ajuster l'écartement e entre les extrémités des deux branches 5₁ des deux pièces de jonction afin de réaliser la soudure dans les conditions optimales.

Dans une variante de réalisation représentée sur la figure 3A, l'épaississement relatif de l'extrémité libre de la première surface de révolution externe 5₃a est obtenu en la biseautant sur sa face interne 5₂d de manière à ce que cette face interne 5₂d soit inclinée d'un angle β par rapport à l'axe XX', supérieur au demi-angle au sommet α₁ du reste de la surface tronconique 5₃a.

Sur la figure 4A, le reste de la première surface de révolution externe 5₃a, c'est-à-dire la partie avant l'extrémité torique 5₃a-1 (c'est-à-dire en aval de l'extrémité torique 5₃a-1) reste conique. Et, du fait que la première surface de révolution externe 5₃a conique est davantage espacée de la deuxième surface de révolution interne 5₃b conique, il n'est pas obligatoire que α₁ soit inférieur ou égal à α₂ dans ce cas, puisqu'il suffit que les deux surfaces de révolution coniques 5₃a et 5₃b ne rentrent pas en contact, donc n'interfèrent pas entre elles ailleurs qu'au niveau de l'extrémité torique 5₃a-1.

Dans la présente invention, on a décrit une rame de conduite présentant à une extrémité une forme conique femelle 5₃b et à l'autre extrémité une forme complémentaire mâle 5₃a, soit conique, soit torique dans la zone de futur contact 11 entre deux rames adjacentes, mais on reste dans l'esprit de l'invention avec toute forme de révolution tant pour l'extrémité mâle que l'extrémité femelle, lesdites formes pouvant être des sphères, des paraboloïdes, des hyperboloïdes, ou tout autre forme de révolution, étant entendu que les zones de contact, en référence aux figures 3A-3B, sont respectivement ponctuelle d₀ en fin de phase d'approche (figure 3A) lorsque la rame n repose sur la rame n-1 et après retrait dû au soudage (figure 3B), présente, dans la zone de contact, une forme géométrique de révolution d'axe XX' et de longueur de génératrice d.

Toutes ces diverses formes sont extrêmement simples à usiner dès lors que l'on utilise des tours automatiques à commande numérique pour la finition des pièces forgées d'extrémité, ces pièces devant être réalisées avec précision et avec un soin extrême.

Le diamètre externe de ladite première paroi externe 1₁ est en général de 150mm à 750mm, voire plus, le diamètre interne de ladite paroi interne 1₂ de ladite pièce de jonction étant de 50mm à 700mm.

A titre d'exemple, un PiP constituée d'une conduite interne de 203.2mm de diamètre intérieur, et de 16.3mm d'épaisseur, et d'une conduite externe de 293.05mm de diamètre intérieur, et de 15.4mm d'épaisseur présente une inertie de la section transversale par rapport à son centre, de 245 984 742mm⁴.

Et, selon l'invention, une pièce forgée, sans manchon additionnel, présentant une épaisseur de paroi au niveau de la soudure de raccordement entre deux longueurs unitaires de PiP de 22.83 mm, c'est-à-dire une épaisseur desdites deuxièmes branches externes de 22,83 mm.

Ainsi, l'épaisseur de la pièce de jonction forgée selon l'invention, au niveau de la deuxième branche externe, reste raisonnable et est sensiblement supérieure à l'épaisseur de la conduite externe, sans nécessiter de rapporter un manchon additionnel, ce dernier ne garantissant pas une fiabilité dans le temps.

## Revendications

1. Ensemble d'au moins deux conduites coaxiales (1) constitué en partie courante d'une conduite externe (2₁) et d'une conduite interne (2₂), délimitant un espace annulaire (2₃), comprenant de préférence un matériau d'isolation (2₄), constitué de l'assemblage d'éléments unitaires d'au moins deux conduites coaxiales, comprenant au moins deux éléments unitaires (n-1,n) d'ensemble de conduites coaxiales, dont l'un comprend à au moins une extrémité une première pièce de jonction (1a) assemblée à une deuxième pièce de jonction (1b) à l'extrémité d'un autre dit élément unitaire d'ensemble de conduites coaxiales, chacune des deux dites première et deuxième pièces de jonction (1a,1b) étant une pièce de jonction de révolution délimitée comme suit :
- dans une direction radiale par rapport à un axe longitudinal XX' de révolution de ladite pièce, elle est délimitée par une paroi interne cylindrique (1₂) sensiblement de même diamètre que celui de la partie courante de ladite conduite interne (2₂), et par une paroi externe (1₁) cylindrique de diamètre sensiblement égal au diamètre externe de la partie courante de ladite conduite externe (2₁), et
- dans ladite direction axiale longitudinale XX',
□ du côté de ladite pièce de jonction (1a,1b) où elle est assemblée par soudage (9) à l'extrémité desdites conduites externe et interne d'un dit élément unitaire d'un ensemble d'au moins deux conduites coaxiales, lesdites parois externe (1₁) et interne (1₂) de ladite pièce de jonction forment en section longitudinale des premières branches, de préférence des premières branches externe (3₁) et respectivement interne (3₂) sensiblement de même épaisseur que lesdites conduites externe (2₁) et interne (2₂) auxquelles elles sont assemblées, lesdites premières branches externe (3₁) et interne (3₂) délimitant une première cavité annulaire (4), et
□ du côté de ladite pièce de jonction (1a,1b) où elle est assemblée à une autre dite pièce de jonction, elle-même assemblée par soudage (9) à l'extrémité dudit autre élément unitaire d'ensemble de deux conduites coaxiales, lesdites parois externe (1₁) et interne (1₂) forment en section longitudinale des deuxièmes branches respectivement externe (5₁) et interne (5₂a,5₂b), délimitant une deuxième cavité interne annulaire (6),
• les deux dites première et deuxième pièces de jonction étant soudées l'une à l'autre uniquement au niveau de l'extrémité de leur dites deuxièmes branches externes (5₁),
• de préférence, les fonds (4₁, 6₁) desdites première et deuxième cavités (4, 6) étant espacés dans ladite direction longitudinale XX', de manière à délimiter une zone pleine massive (10) de ladite pièce de jonction dans laquelle lesdites parois externe (1₁) et interne (1₂) forment les faces externe et interne d'une même paroi cylindrique, et
- les extrémités desdites deux deuxièmes branches internes (5₂a,5₂b) non soudées des dites première et deuxième pièces de jonction (1a,1b) sont en contact métal/métal l'une avec l'autre sous contrainte de déformation élastique au niveau de leur surface de contact (11) de révolution, de préférence conique, entre une première surface de révolution externe (5₃a) sur la face externe de la deuxième branche interne (5₂a) de la première pièce de jonction (1a) et une deuxième surface de révolution interne (5₃b) sur la face interne de la deuxième branche interne (5₂b) de la deuxième pièce de jonction (1b), ladite deuxième branche interne (5₂a) de la première pièce de jonction (1a) formant une deuxième branche interne mâle située à l'intérieur de la deuxième branche interne femelle (5₂b) de la deuxième pièce de jonction (1b),
**caractérisé en ce que** ladite deuxième surface de révolution interne (5₃b) est de forme différente, mais de même axe de révolution (XX') que ladite première surface de révolution externe (5₃a), de sorte que lesdites première surface de révolution externe (5₃a) et deuxième surface de révolution interne (5₃b) présentent, lorsque celles-ci sont disposées coaxialement et engagées en contact l'une contre l'autre, une ligne de contact initiale circulaire (do) se transformant en dite surface de contact (11) après ladite contrainte de déformation élastique résultant du retrait de la soudure (19) des extrémités des dites deuxièmes branches externes (5₁) des dites deux pièces de jonction (1a,1b), de sorte que lesdites deuxièmes cavités internes (6) sont étanches vis-à-vis de l'intérieur (2₅) la conduite interne (2₂).

2. Ensemble d'au moins deux conduites coaxiales, selon la revendication 1, **caractérisé en ce que** :
- ladite deuxième branche interne (5₂a) de ladite première pièce de jonction (1a) forme une deuxième branche interne mâle (5₂a) à l'intérieur de la deuxième branche interne femelle (5₂b) de la deuxième pièce de jonction (1b), et ladite deuxième branche interne mâle (5₂a) est de rigidité inférieure à la rigidité de la deuxième branche interne femelle (5₂b), et
- lesdites première surface de révolution externe (5₃a) et deuxième surface de révolution interne (5₃b) sont en contact métal/métal résultant d'une déformation élastique sur une dite surface de contact (11), dont la dimension (d₁) en projection dans la direction longitudinale axiale (XX') est inférieure à la dimension (D) en projection dans la direction longitudinale axiale (XX') de la zone de chevauchement entre les dite deuxième branche interne mâle (5₂a) et dite deuxième branche interne femelle (5₂b).

3. Ensemble d'au moins deux conduites coaxiales selon l'une des revendications 1 ou 2, **caractérisé en ce que** la longueur de génératrice (d) de ladite surface de contact de révolution (11) entre lesdites première surface de révolution externe (5₃a) et deuxième surface de révolution interne (5₃b) est de 0.5 à 5 mm, de préférence de 2 à 4 mm.

4. Ensemble d'au moins deux conduites coaxiales selon l'une des revendications 1 à 3, **caractérisé en ce que** ladite deuxième surface de révolution interne (5₃b) ne s'inscrit pas dans une même enveloppe tronconique que ladite première surface de révolution externe (5₃a).

5. Ensemble d'au moins deux conduites coaxiales selon l'une des revendications 1 à 4, **caractérisé en ce que** ladite première surface de révolution externe (5₃a) est une surface tronconique dont le demi-angle au sommet α₁ est inférieur au demi-angle de sommet α₂ de ladite deuxième surface de révolution interne (5₃b) tronconique, α₁ et α₂ étant inférieurs à 45°, de préférence de 30 à 35°.

6. Ensemble d'au moins deux conduites coaxiales selon la revendication 5, **caractérisé en ce que** l'épaisseur de ladite deuxième branche interne mâle (5₂a) de ladite première pièce de jonction (1a) va en diminuant depuis le fond (6₁) de ladite deuxième cavité annulaire (6) jusqu'à son extrémité longitudinale.

7. Ensemble d'au moins deux conduites coaxiales selon la revendication 6, **caractérisé en ce que** l'extrémité longitudinale (5) de ladite deuxième branche interne mâle (5₂a) de ladite première pièce de jonction (1a) comprend à son extrémité longitudinale du côté de sa face interne (5₂c) une terminaison biseautée (5₂d) inclinée d'un angle par rapport à la direction longitudinale axiale, l'angle d'inclinaison β de ladite extrémité biseautée (5₂d) étant supérieur au demi-angle au sommet α₁ de ladite première surface de révolution externe tronconique (5₃a).

8. Ensemble d'au moins deux conduites coaxiales selon l'une des revendications 1 à 7, **caractérisé en ce que** ladite première surface de révolution externe (5₃a) présente une forme tronconique se poursuivant à l'extrémité la plus mince de ladite deuxième branche interne (5₂a) par une surface torique (5₃a-1) de même axe de révolution XX', à convexité tournée vers ladite deuxième surface de révolution interne (5₃b) de forme tronconique.

9. Ensemble d'au moins deux conduites coaxiales selon l'une des revendications 1 à 8, **caractérisé en ce que** l'extrémité de la deuxième branche interne (5₂a) de la première pièce de jonction (1a) est en retrait (ΔI2) dans ladite direction longitudinale axiale (XX') par rapport à l'extrémité de la deuxième branche externe (5₁) de la première pièce de jonction (1a) et l'extrémité de la deuxième branche externe (5₁) de la deuxième pièce de jonction (1b) est en retrait dans la direction longitudinale axiale (XX') par rapport à l'extrémité de la deuxième branche interne (5₂b) de la deuxième pièce de jonction (1b), laquelle est de rigidité supérieure à la deuxième branche interne (5₂a) de la première pièce de jonction (1a).

10. Procédé d'assemblage d'un ensemble d'au moins deux conduites coaxiales selon l'une des revendications 1 à 9, **caractérisé en ce que** :
1) on assemble de préférence dans une tour de pose en « J », un premier ensemble de conduites coaxiales (n-1), de préférence incliné en suspension à l'extrémité inférieure dans une dite tour de pose en « J », comportant une dite première pièce de jonction (1a) à son extrémité en amont, avec un deuxième dit élément unitaire d'ensemble de conduites coaxiales (n), de préférence incliné à l'extrémité inférieure d'une dite tour de pose en « J », comportant une dite deuxième pièce de jonction différente (1b) de ladite première pièce de jonction à son extrémité avale, de telle sorte que le premier contact de ladite deuxième pièce de jonction (1b) avec ladite première pièce de jonction se réalise au niveau d'une ligne de contact circulaire (d₀) entre ladite première surface de révolution externe (5₃a) et dite deuxième surface de révolution interne (5₃b), les deux dites deuxièmes branches externes (5₁) des deux dites première et deuxième pièces de jonction (1a,1b) étant de préférence de même épaisseur, les faces frontales (7) d'extrémité des dites deuxièmes branches externes (5₁) des deux dites première et deuxième pièces de jonction étant espacées d'une distance (e) d'au moins 1 mm, de préférence de 2 à 5 mm, et
2) on réalise le soudage (19) entre elles des faces frontales (7) et des chanfreins (18) des extrémités libres des seules dites deuxièmes branches externes (5₁) des dites première et deuxième pièces de jonction (1a,1b) des deux dits éléments unitaires de conduites (n-1,n).

## Patentansprüche

1. Anordnung aus wenigstens zwei koaxialen Rohrleitungen (1), die im durchgehenden Teil von einer äußeren Rohrleitung (2₁) und von einer inneren Rohrleitung (2₂) gebildet ist, welche einen ringförmigen Raum (2₃) begrenzen, der vorzugsweise ein Isolationsmaterial (2₄) umfaßt, bestehend aus der Verbindung von Einzelelementen von wenigstens zwei koaxialen Rohrleitungen, umfassend wenigstens zwei Einzelelemente (n-1, n) einer Anordnung aus koaxialen Rohrleitungen, von denen das eine an wenigstens einem Ende ein erstes Verbindungsteil (1a) umfaßt, das mit einem zweiten Verbindungsteil (1b) am Ende eines weiteren Einzelelements der Anordnung aus koaxialen Rohrleitungen verbunden ist, wobei ein jedes der beiden ersten und zweiten Verbindungsteile (1a, 1b) ein Rotationsverbindungsteil ist, das wie folgt begrenzt ist:
- in einer radialen Richtung bezogen auf eine Rotationslängsachse XX' des Teils, ist es durch eine zylindrische Innenwand (1₂) begrenzt, die im wesentlichen den gleichen Durchmesser wie der durchgehende Teil der inneren Rohrleitung (2₂) aufweist, sowie durch eine zylindrische Außenwand (1₁), deren Durchmesser im wesentlichen gleich dem Außendurchmesser des durchgehenden Teils der äußeren Rohrleitung (2₁) ist, und
- in der axialen Längsrichtung XX',
■ auf der Seite des Verbindungsteils (1a, 1 b), auf der es mit dem Ende der äußeren und der inneren Rohrleitung eines Einzelelements einer Anordnung aus wenigstens zwei koaxialen Rohrleitungen verschweißt (9) ist, bilden die Außenwand (1₁) und die Innenwand (1₂) des Verbindungsteils im Längsschnitt erste Schenkel, vorzugsweise einen ersten äußeren Schenkel (3₁) bzw. einen ersten inneren Schenkel (3₂) mit im wesentlichen gleicher Dicke wie die äußere Rohrleitung (2₁) und die innere Rohrleitung (2₂), mit denen sie verbunden sind, wobei der erste äußere Schenkel (3₁) und der erste innere Schenkel (3₂) einen ersten ringförmigen Hohlraum (4) begrenzen, und
■ auf der Seite des Verbindungsteils (1a, 1b), auf der es mit einem weiteren Verbindungsteil verbunden ist, das selbst mit dem Ende des weiteren Einzelelements der Anordnung aus zwei koaxialen Rohrleitungen verschweißt (9) ist, bilden die Außenwand (1₁) und die Innenwand (1₂) im Längsschnitt einen zweiten äußeren Schenkel (5₁) bzw. einen zweiten inneren Schenkel (5₂a, 5₂b), die einen zweiten ringförmigen Innenhohlraum (6) begrenzen,
• wobei die beiden ersten und zweiten Verbindungsteile lediglich im Bereich des Endes ihrer zweiten äußeren Schenkel (5₁) miteinander verschweißt sind,
• wobei vorzugsweise die Gründe (4₁, 6₁) des ersten und des zweiten Hohlraums (4, 6) in der Längsrichtung XX' voneinander beabstandet sind, so daß ein ausgefüllter massiver Bereich (10) des Verbindungsteils begrenzt wird, in dem die Außenwand (1₁) und die Innenwand (1₂) die Außen- und die Innenseite einer gleichen zylindrischen Wand bilden, und
- die Enden der beiden nicht verschweißten zweiten inneren Schenkel (5₂a, 5₂b) des ersten und zweiten Verbindungsteils (1a, 1b) im Bereich ihrer vorzugsweise konischen Rotationskontaktfläche (11) zwischen einer ersten äußeren Rotationsfläche (5₃a) an der Außenseite des zweiten inneren Schenkels (5₂a) des ersten Verbindungsteils (1a) und einer zweiten inneren Rotationsfläche (5₃b) an der Innenseite des zweiten inneren Schenkels (5₂b) des zweiten Verbindungsteils (1b) unter elastischer Verformungsspannung miteinander in Metall/Metall-Kontakt sind, wobei der zweite innere Schenkel (5₂a) des ersten Verbindungsteils (1a) einen zweiten männlichen Innenschenkel, der innerhalb des zweiten weiblichen Innenschenkels (5₂b) des zweiten Verbindungsteils (1b) gelegen ist, bildet,
**dadurch gekennzeichnet, daß** die zweite innere Rotationsfläche (5₃b) eine andere Form als, aber die gleiche Rotationsachse (XX') wie die erste äußere Rotationsfläche (5₃a) aufweist, so daß die erste äußere Rotationsfläche (5₃a) und die zweite innere Rotationsfläche (5₃b) dann, wenn sie koaxial angeordnet und aneinander in Kontakt gesteckt sind, eine kreisförmige Anfangskontaktlinie (d₀) bilden, die sich nach der elastischen Verformungsspannung, welche aus dem Schrumpfen der Schweißnaht (19) der Enden der zweiten äußeren Schenkel (5₁) der beiden Verbindungsteile (1a, 1b) resultiert, in eine Kontaktfläche (11) umwandelt, so daß die zweiten Innenhohlräume (6) gegenüber dem Innenraum (2₅) der inneren Rohrleitung (2₂) dicht sind.

2. Anordnung aus wenigstens zwei koaxialen Rohrleitungen, nach Anspruch 1, **dadurch gekennzeichnet, daß**:
- der zweite innere Schenkel (5₂a) des ersten Verbindungsteils (1a) einen zweiten männlichen Innenschenkel (5₂a) innerhalb des zweiten weiblichen Innenschenkels (5₂b) des zweiten Verbindungsteils (1b) bildet und der zweite männliche Innenschenkel (5₂a) eine geringere Steifigkeit als der zweite weibliche Innenschenkel (5₂b) aufweist, und
- die erste äußere Rotationsfläche (5₃a) und die zweite innere Rotationsfläche (5₃b) sich in Metall/Metall-Kontakt befinden, der aus einer elastischen Verformung auf einer Kontaktfläche (11) resultiert, deren Abmessung (d₁) in Projektion in axialer Längsrichtung (XX') geringer als die Abmessung (D) in Projektion in axialer Längsrichtung (XX') des Überlappungsbereichs zwischen dem zweiten männlichen Innenschenkel (5₂a) und dem zweiten weiblichen Innenschenkel (5₂b) ist.

3. Anordnung aus wenigstens zwei koaxialen Rohrleitungen, nach einem der Ansprüche 1 oder 2, **dadurch gekennzeichnet, daß** die Länge der Mantellinie (d) der Rotationskontaktfläche (11) zwischen der ersten äußeren Rotationsfläche (5₃a) und der zweiten inneren Rotationsfläche (5₃b) 0,5 bis 5 mm, vorzugsweise 2 bis 4 mm beträgt.

4. Anordnung aus wenigstens zwei koaxialen Rohrleitungen, nach einem der Ansprüche 1 bis 3, **dadurch gekennzeichnet, daß** die zweite innere Rotationsfläche (5₃b) nicht in einer gleichen kegelstumpfförmigen Hülle wie die erste äußere Rotationsfläche (5₃a) enthalten ist.

5. Anordnung aus wenigstens zwei koaxialen Rohrleitungen, nach einem der Ansprüche 1 bis 4, **dadurch gekennzeichnet, daß** die erste äußere Rotationsfläche (5₃a) eine kegelstumpfförmige Fläche ist, deren Scheitelhalbwinkel α₁ kleiner als der Scheitelhalbwinkel α₂ der kegelstumpfförmigen zweiten inneren Rotationsfläche (5₃b) ist, wobei α₁ und α₂ kleiner als 45° sind, vorzugsweise 30 bis 35°betragen.

6. Anordnung aus wenigstens zwei koaxialen Rohrleitungen, nach Anspruch 5, **dadurch gekennzeichnet, daß** die Dicke des zweiten männlichen Innenschenkels (5₂a) des ersten Verbindungsteils (1a) vom Grund (6₁) des zweiten ringförmigen Hohlraums (6) bis zu seinem Längsende abnehmend ist.

7. Anordnung aus wenigstens zwei koaxialen Rohrleitungen, nach Anspruch 6, **dadurch gekennzeichnet, daß** das Längsende (5) des zweiten männlichen Innenschenkels (5₂a) des ersten Verbindungsteils (1a) an seinem Längsende auf der Seite seiner Innenfläche (5₂c) einen abgeschrägten Abschluß (5₂d), der um einen Winkel β gegenüber der axialen Längsrichtung geneigt ist, aufweist, wobei der Neigungswinkel β des abgeschrägten Endes (5₂d) größer als der Scheitelhalbwinkel α₁ der kegelstumpfförmigen ersten äußeren Rotationsfläche (5₃a) ist.

8. Anordnung aus wenigstens zwei koaxialen Rohrleitungen, nach einem der Ansprüche 1 bis 7, **dadurch gekennzeichnet, daß** die erste äußere Rotationsfläche (5₃a) eine Kegelstumpfform aufweist, die am dünnsten Ende des zweiten inneren Schenkels (5₂a) durch eine torische Fläche (5₃a-1) mit gleicher Rotationsachse XX', mit der kegelstumpfförmigen zweiten inneren Rotationsfläche (5₃b) zugewandter Konvexität fortgesetzt ist.

9. Anordnung aus wenigstens zwei koaxialen Rohrleitungen, nach einem der Ansprüche 1 bis 8, **dadurch gekennzeichnet, daß** das Ende des zweiten inneren Schenkels (5₂a) des ersten Verbindungsteils (1a) in der axialen Längsrichtung (XX') gegenüber dem Ende des zweiten äußeren Schenkels (5₁) des ersten Verbindungsteils (1a) zurückliegt (ΔI2) und das Ende des zweiten äußeren Schenkels (5₁) des zweiten Verbindungsteils (1b) in der axialen Längsrichtung (XX') gegenüber dem Ende des zweiten inneren Schenkels (5₂b) des zweiten Verbindungsteils (1b), der eine größere Steifigkeit als der zweite innere Schenkel (5₂a) des ersten Verbindungsteils (1a) aufweist, zurückliegt.

10. Verfahren zum Verbinden einer Anordnung aus wenigstens zwei koaxialen Rohrleitungen nach einem der Ansprüche 1 bis 9, **dadurch gekennzeichnet, daß**:
1) vorzugsweise in einem J-Lay-Turm eine erste Anordnung aus koaxialen Rohrleitungen (n-1), vorzugsweise am unteren Ende hängend geneigt in einem J-Lay-Turm, die ein erstes Verbindungsteil (1a) an ihrem stromaufwärtigen Ende umfaßt, mit einem zweiten Einzelelement einer Anordnung aus koaxialen Rohrleitungen (n), vorzugweise am unteren Ende eines J-Lay-Turms geneigt, das ein sich von dem ersten Verbindungsteil unterscheidendes zweites Verbindungsteil (1b) an seinem stromabwärtigen Ende umfaßt, derart verbunden wird, daß der erste Kontakt des zweiten Verbindungsteils (1b) mit dem ersten Verbindungsteil im Bereich einer kreisförmigen Kontaktlinie (d₀) zwischen der ersten äußeren Rotationsfläche (5₃a) und der zweiten inneren Rotationsfläche (5₃b) stattfindet, wobei die beiden zweiten äußeren Schenkel (5₁) der beiden ersten und zweiten Verbindungsteile (1a, 1 b) vorzugsweise die gleiche Dicke aufweisen, wobei die endseitigen Stirnflächen (7) der zweiten äußeren Schenkel (5₁) der beiden ersten und zweiten Verbindungsteile um einen Abstand (e) von wenigstens 1 mm, vorzugsweise 2 bis 5 mm beabstandet sind, und
2) das Verschweißen (19) der Stirnflächen (7) und der Fasen (18) der freien Enden untereinander lediglich der zweiten äußeren Schenkel (5₁) des ersten und des zweiten Verbindungsteils (1a, 1b) der beiden Einzelelemente von Rohrleitungen (n-1, n) vollzogen wird.

## Claims

1. An assembly (1) of at least two coaxial pipes constituted in a main portion by an outer pipe (2₁) and an inner pipe (2₂) defining an annular space (2₃) preferably containing lagging material (2₄), the assembly being constituted by assembling together unit elements of at least two coaxial pipes, comprising at least two coaxial pipe assembly unit elements (n-1, n), one of which has, at at least one end, a first junction part (1a) joined to a second junction part (1b) at the end of another said coaxial pipe assembly unit element, each of said first and second junction parts (1a, 1b) being a body of revolution defined as follows:
• in a radial direction relative to a longitudinal axis XX' of symmetry of said part, it is defined by a cylindrical inner wall (1₂) of substantially the same diameter as the intermediate portion of said inner pipe (2₂), and by a cylindrical outer wall (1₁) of diameter substantially equal to the outside diameter of the intermediate portion of said outer pipe (2₁); and
• in said direction of the longitudinal axis XX':
• on the end of said junction part (1a, 1b) that is joined by welding (9) to the ends of said outer and inner pipes of a said unit element of an assembly of at least two coaxial pipes, said outer and inner walls (1₁, 1₂) of said junction part forming first branches (3₁, 3₂) in longitudinal section, preferably respective outer and inner first branches, of substantially the same thickness as said outer and inner pipes (2₁, 2₂) to which they are connected, said outer and inner first branches (3₁, 3₂) defining a first annular cavity (4); and
• at the opposite end of said junction part (1a, 1b) where it is joined to another said junction part, itself connected by welding (9) to the end of said another unit element of an assembly of two coaxial pipes, said outer and inner walls (1₁, 1₂) forming in longitudinal section respective outer and inner second branches (5₁, 5₂a, 5₂b) defining an internal second annular cavity (6);
• the two said first and second junction parts being welded to each other solely via the ends of their said outer second branches (5₁);
• preferably, the bottoms (4₁, 6₁) of said first and second cavities (4, 6) being spaced apart in said longitudinal direction XX' so as to define a massive solid zone (10) of said junction part in which said outer and inner walls (1₁, 1₂) form the outer and inner faces of a single cylindrical wall; and
• the ends of said two non-welded-together inner second branches (5₁, 5₂a, 5₂b) of said first and second junction parts (1a, 1b) are in metal-on-metal contact with each other under elastic deformation stress via their contact surface (11), which is a preferably-conical surface of revolution, between an outer first surface of revolution (5₃a) on the outer face of the inner second branch (5₂a) of the first junction part (1a) and an inner second surface of revolution (5₃b) on the inner face of the inner second branch (5₂b) of the second junction part (1b), said inner second branch (5₂a) of the first junction part forming a male inner second branch situated inside the female inner second branch (5₂b) of the second junction part (1b),
the assembly being **characterized in that** said inner second surface of revolution (5₃b) is of a shape that is different, but of the same axis of revolution (XX') as the outer first surface of revolution (5₃a), such that said outer first surface of revolution (5₃a) and inner second surface of revolution (5₃b) present, when they are arranged coaxially and engaged in contact one against the other, an initial line of contact (d₀) that is circular and that transforms into said contact surface (11) after said elastic deformation stress resulting from the elastic deformation due to the shrinkage of the weld (19) between the ends of said outer second branches (5₁) of said two junction parts (1a, 1b), so that said internal second cavities (6) are leaktight relative to the inside (2₅) of the inner pipe (2₂).

2. An assembly of at least two coaxial pipes according to claim 1, **characterized in that**:
• said inner second branch (5₂a) of said first junction part (1a) forms a male inner second branch (5₂a) inside the female inner second branch (5₂b) of the second junction part (1b), and said male inner second branch (5₂a) is of stiffness that is less than the stiffness of the female inner second branch (5₂b) ; and
• said outer first surface of revolution (5₃a) and said inner second surface of revolution (5₃b) are in metal-on-metal contact resulting from elastic deformation on a said contact surface (11), which surface presents a dimension (d₁) in projection onto the axial longitudinal direction (XX') that is less than the dimension (D) in projection onto the axial longitudinal direction (XX') of the overlap zone between said male inner second branch (5₂a) and said female inner second branch (5₂b).

3. An assembly of at least two coaxial pipes according to claim 1 or claim 2, **characterized in that** the length of the generator line (d) of said contact surface of revolution (11) between said outer first surface of revolution (5₃a) and said inner second surface of revolution (5₃b) lies in the range 0.5 mm to 5 mm, and preferably in the range 2 mm to 4 mm.

4. An assembly of at least two coaxial pipes according to any one of claims 1 to 3, **characterized in that** said inner second surface of revolution (5₃b) is not inscribed in the same frustoconical envelope as said outer first surface of revolution (5₃a).

5. An assembly of at least two coaxial pipes according to any one of claims 1 to 4, **characterized in that** said outer first surface of revolution (5₃a) is a frustoconical surface having a half-angle at the apex α₁ that is less than the half-angle at the apex α₂ of said frustoconical inner second surface of revolution (5₃b), where α₁ and α₂ are less than 45°, preferably lying in the range 30° to 35°.

6. An assembly of at least two coaxial pipes according to claim 5, **characterized in that** the thickness of said male inner second branch (5₂a) of said first junction part (1a) decreases going from the bottom (6₁), of said annular second cavity (6) to its longitudinal end.

7. An assembly of at least two coaxial pipes according to claim 6, **characterized in that** the longitudinal end (5) of said male inner second branch (5₂a) of said first junction part (1a) includes at its longitudinal end beside its inner face (5₂c) a chamfered termination (5₂d) inclined at an angle β relative to the axial longitudinal direction, the angle of inclination β of said chamfered end (5₂d) being greater than the half-angle at the apex α₁ of said frustoconical outer first surface of revolution (5₃a).

8. An assembly of at least two coaxial pipes according to any one of claims 1 to 7, **characterized in that** said outer first surface of revolution (5₃a) presents a frustoconical shape continuing at the inner end of said inner second branch (5₂a) in the form of a toroidal surface (5₃a-1) having the same axis of revolution XX', with its convex side facing towards said inner second surface of revolution (5₃b) of frustoconical shape.

9. An assembly of at least two coaxial pipes according to any one of claims 1 to 8, **characterized in that** the end of the inner second branch (5₂a) of the first junction part (1a) is set back (Δℓ2) in said axial longitudinal direction (XX') relative to the end of the outer second branch (5₁) of the first junction part (1a), and the end of the outer second branch (5₁) of the second junction part (1b) is set back in the axial longitudinal direction (XX') relative to the end of the inner second branch (5₂b) of the second junction part (1b), which is of stiffness that is greater than the stiffness of the inner second branch (5₂a) of the first junction part (1a).

10. A method of assembling an assembly of at least two coaxial pipes according to any one of claims 1 to 9, the method being **characterized by**:
1) assembling together, preferably in a J-lay tower, a first coaxial pipe assembly (n-1), preferably inclined in suspension at the bottom end of a said J-lay tower, having a said first junction part (1a) at its upstream end, and a unit element of a second said coaxial pipe assembly (n), that is preferably inclined at the bottom end of a said J-lay tower, having at its downstream end, a second junction part (1b) different from said first junction part, whereby the first contact of said second junction part (1b) with said first junction part takes place via a circular line of contact (do) between said outer first surface of revolution (5₃a) and said inner second surface of revolution (5₃b), said two outer second branches (5₁) of said first and second junction parts (1a, 1b) preferably being of the same thickness, the front end faces (7) of said outer second branches (5₁) of said first and second junction parts being spaced apart by a distance (e) of at least 1 mm, and preferably of 2 mm to 5 mm; and
2) making a weld (19) between the end faces (7) and the chamfers (18) at the free ends of said outer second branches (5₁) only of said first and second junction parts (1a, 1b) of said two pipe unit elements (n-1, n).
